(19) Europäisches Patentamt
European Patent Office
Office européen des brevets

(11) **EP 4 539 351 A1**

(12) **EUROPEAN PATENT APPLICATION**
published in accordance with Art. 153(4) EPC

(43) Date of publication:
**16.04.2025 Bulletin 2025/16**

(21) Application number: **23834771.0**

(22) Date of filing: **30.06.2023**

(51) International Patent Classification (IPC):
*H04B 7/0413* (2017.01)

(52) Cooperative Patent Classification (CPC):
**H04B 7/0413; H04B 7/06**

(86) International application number:
**PCT/CN2023/105001**

(87) International publication number:
**WO 2024/008004 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2022 CN 202210800531**

(71) Applicant: **Huawei Technologies Co., Ltd.**
**Shenzhen, Guangdong 518129 (CN)**

(72) Inventors:
• **CHAI, Xiaomeng**
**Shenzhen, Guangdong 518129 (CN)**
• **SUN, Yan**
**Shenzhen, Guangdong 518129 (CN)**
• **HANG, Haicun**
**Shenzhen, Guangdong 518129 (CN)**
• **CHEN, Jiaxuan**
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND APPARATUS**

(57)    This disclosure provides a communication method and apparatus, and is applied to the field of communication technologies. The communication method includes: determining N pieces of first channel state indication information by using a first encoder and channel information of N downlink transport layers input into the first encoder, where N is a positive integer greater than 1; determining second channel state indication information by using a second encoder and the N pieces of first channel state indication information input into the second encoder, where the second channel state indication information corresponds to the N downlink transport layers, and a sequence length corresponding to the second channel state indication information is less than a sum of sequence lengths corresponding to the N pieces of first channel state indication information; and sending the second channel state indication information. In this disclosure, channel state information feedback overheads are reduced by using an AI model.

FIG. 5

**Description**

**CROSS-REFERENCE TO RELATED APPLICATIONS**

This application claims priority to Chinese Patent Application No. 202210800531.3, filed with the China National Intellectual Property Administration on July 6, 2022 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

In a wireless communication network, for example, in a mobile communication network, the network supports more diverse services, and therefore needs to meet more diverse requirements. For example, the network needs to be capable of supporting ultra-high speed, ultra-low latency, and/or ultra-large connections. This feature makes network planning, network configuration, and/or resource scheduling increasingly complex. In addition, because the network has increasingly powerful functions, for example, supporting an increasingly high spectrum and supporting new technologies such as a high-order multiple input multiple output (multiple input multiple output, MIMO) technology, beamforming, and/or beam management, network energy saving becomes a hot research topic. These new requirements, scenarios, and features bring unprecedented challenges to network planning, operation and maintenance, and efficient operation. To address these challenges, an artificial intelligence technology may be introduced into the wireless communication network, to implement network intelligence. Based on this, how to effectively implement artificial intelligence in the network is a problem worth studying.

**SUMMARY**

This disclosure provides a communication method and apparatus, to reduce channel state information (channel state information, CSI) feedback overheads by using artificial intelligence.

According to a first aspect, this disclosure provides a communication method, including: determining N pieces of first channel state indication information by using a first encoder and channel information of N downlink transport layers input into the first encoder, where N is a positive integer greater than 1; determining second channel state indication information by using a second encoder and the N pieces of first channel state indication information input into the second encoder, where the second channel state indication information corresponds to the N downlink transport layers, and a sequence length corresponding to the second channel state indication information is less than a sum of sequence lengths corresponding to the N pieces of first channel state indication information; and sending the second channel state indication information.

In the foregoing design, compression is performed twice on downlink channel information via two layers of encoders, so that resources occupied by common information in channel information (CSI) of a plurality of downlink transport layers are reduced, and CSI feedback overheads can be reduced.

In a possible design, the method further includes: sending information indicating a rank, where a value of N is equal to a value of the rank. When the value of the rank is greater than 1, it may implicitly indicate that compression is performed twice on the downlink channel information. For example, the information indicating the rank may be a rank indicator (rank indicator, RI). In such a design, an existing RI may be reused to implicitly indicate other content, so that information utilization can be improved.

In a possible design, one or more of a structure of the second encoder, a structure of a second decoder matching the second encoder, or a structure of a second auto-encoder to which the second encoder belongs correspond to the value of N. One or more of a structure of the first encoder, a structure of a first decoder matching the first encoder, or a structure of a first auto-encoder to which the first encoder belongs also correspond to the value of N. The foregoing information indicating the rank may be further used by a device that receives the information indicating the rank, to determine the structure of the second decoder and/or the structure of the first decoder.

In a possible design, a range of the sequence length of the second channel state indication information corresponds to one or more of the structure of the second encoder, the structure of the second decoder matching the second encoder, or the structure of the second auto-encoder to which the second encoder belongs, and/or corresponds to the value of N. In other words, the range of the sequence length of the second channel state indication information may indicate one or more of the structure of the second encoder, the structure of the second decoder matching the second encoder, or the structure of the second auto-encoder to which the second encoder belongs, and/or the value of N.

In a possible design, a range of the sequence length of the second channel state indication information corresponds to one or more of the structure of the first encoder, the structure of the first decoder matching the first encoder, or the structure of the first auto-encoder to which the first encoder belongs, and/or corresponds to the value of N. In other words, the range of the sequence length of the second channel state indication information may indicate one or more of the structure of the first encoder, the structure of the first decoder matching the first encoder, or the structure of the first auto-encoder to which the first encoder belongs, and/or the value of N.

In a possible design, the method further includes: sending second information, where the second information indicates one or more of the following: the second encoder, a second decoder matching the second encoder, and a second auto-encoder (auto-encoder, AE) to which the second encoder belongs. In such a design, an information receiving party can quickly determine the second decoder matching the second encoder, improving decoding efficiency.

In a possible design, the method further includes: sending first information, where the first information indicates one or more of the following: the first encoder, a first decoder matching the first encoder, and a first auto-encoder AE to which the first encoder belongs. In such a design, the information receiving party can quickly determine the first decoder matching the first encoder, improving decoding efficiency.

The following describes in detail the structure, an input, and/or an output of the first encoder.

In a possible design, the first encoder may have a compression function and a quantization function, or the first encoder may have a compression function but not a quantization function.

In a possible design, the first encoder includes N first artificial intelligence (artificial Intelligence, AI) models, the channel information of the N downlink transport layers is respectively input into the N first AI models, and each of the N first AI models outputs one piece of first channel state indication information. It may be understood that one first AI model in the first encoder is used to process channel information of only one downlink transport layer, and the first AI models are independent of each other and perform parallel processing, so that processing efficiency can be improved.

In another possible design, the first encoder includes one first AI model, the channel information of the N downlink transport layers is input in serial or parallel into the one first AI model, and the one first AI model correspondingly outputs in serial or parallel the N pieces of first channel state indication information. Alternatively, the first encoder includes M first AI models, M is an integer greater than 1 and less than N, channel information of some downlink transport layers in the channel information of the N downlink transport layers is input in serial or parallel into one first AI model in the M first AI models, and the one first AI model correspondingly outputs in serial or parallel first channel state indication information corresponding to the some downlink transport layers. In this design, one first AI model in the first encoder may be used to process channel information of a plurality of downlink transport layers, so that a quantity of AI models can be reduced, and model storage resources can be reduced.

The following describes in detail the structure, an input, and/or an output of the second encoder.

In a possible design, the second encoder has a compression function and a quantization function. The N pieces of first channel state indication information are input into the second encoder, and the output of the second encoder includes the second channel state indication information. In this design, the structure of the second encoder may be understood with reference to the following several possible examples.

In a first possible example, the second encoder includes one second AI model. An input of the one second AI model includes the N pieces of first channel state indication information, and an output of the one second AI model includes the second channel state indication information. In this design, one second AI model is used to process a plurality of pieces of first channel state indication information, so that the model storage resources can be reduced.

In a second possible example, N is greater than 2, and the second encoder includes N-1 second AI models. An input of a 1st second AI model in the N-1 second AI models includes a 1st piece of first channel state indication information and a 2nd piece of first channel state indication information in the N pieces of first channel state indication information, and an output of the 1st second AI model includes a 1st piece of fourth channel state indication information. An input of an $i^{th}$ second AI model in the N-1 second AI models includes an $(i-1)^{th}$ piece of fourth channel state indication information output by an $(i-1)^{th}$ second AI model and an $(i+1)^{th}$ piece of first channel state indication information in the N pieces of first channel state indication information, and an output of the $i^{th}$ second AI model includes an $i^{th}$ piece of fourth channel state indication information, where $2 \le i \le N-1$, and i is a positive integer. An $(N-1)^{th}$ piece of fourth channel state indication information output by an $(N-1)^{th}$ second AI model is the second channel state indication information. In such a design, hierarchical compression is implemented, and a second encoder in which N is any number greater than 2 may be implemented by using a plurality of second AI models whose quantities of input ports are 2 and whose quantities of output ports are 1. The plurality of second AI models may be the same or different. For example, the plurality of second AI models are the same, and the second encoder may be implemented by training one second AI model and invoking the second AI model for a plurality of times. Therefore, the CSI feedback overheads are reduced, and a quantity of second AI models that need to be trained is reduced.

In a third possible example, N is greater than 2, the second encoder includes K second AI models, K is an integer greater than 1 and less than N, and some first channel state indication information in the N pieces of first channel state indication information is input in parallel into one first AI model in the K second AI models. Optionally, K is 2. In such a design, hierarchical compression is implemented, and a second encoder in which N is any number greater than 2 may be implemented by using a plurality of second AI models whose quantities of input ports are integers from 2 to N-1 and whose quantities of output ports are 1. In this way, the second encoder can be implemented by training several second AI models whose quantities of input ports are different. Therefore, the CSI feedback overheads are reduced, a quantity of second AI models that need to be trained is reduced, and a quantity of second AI models for implementing the second encoder can be reduced, improving an encoding speed.

In another possible design, the second encoder has a compression function but not a quantization function. The N pieces of first channel state indication information are input into the second encoder, and the output of the second encoder includes third channel state indication information. Then, quantization processing is performed on the third channel state indication information to obtain the second channel state indication information. In this design, the structure of the second encoder may be understood with reference to the following several possible examples.

In a first possible example, the second encoder includes one second AI model. An input of the one second AI model includes the N pieces of first channel state indication information, and an output of the one second AI model includes the third channel state indication information. In this design, one second AI model is used to process a plurality of pieces of first channel state indication information, so that the model storage resources can be reduced.

In a second possible example, N is greater than 2, and the second encoder includes N-1 second AI models. An input of a 1st second AI model in the N-1 second AI models includes a 1st piece of first channel state indication information and a 2nd piece of first channel state indication information in the N pieces of first channel state indication information, and an output of the 1st second AI model includes a 1st piece of fourth channel state indication information. An input of an ith second AI model in the N-1 second AI models includes an (i-1)th piece of fourth channel state indication information output by an (i-1)th second AI model and an (i+1)th piece of first channel state indication information in the N pieces of first channel state indication information, and an output of the ith second AI model includes an ith piece of fourth channel state indication information, where $2 \leq i \leq N-1$, and i is a positive integer. An (N-1)th piece of fourth channel state indication information output by an (N-1)th second AI model is the third channel state indication information.

In such a design, hierarchical compression is implemented, and a second encoder in which a quantity (N) of input ports is any number greater than 2 may be implemented by using a plurality of second AI models whose quantities of input ports are 2 and whose quantities of output ports are 1. The plurality of second AI models may be the same or different. For example, the plurality of second AI models are the same, and the second encoder may be implemented by training one second AI model and invoking the second AI model for a plurality of times. Therefore, the CSI feedback overheads are reduced, and a quantity of second AI models that need to be trained is reduced.

In a third possible example, when N is greater than 2, the second encoder includes K second AI models, K is an integer greater than 1 and less than N, and some first channel state indication information in the N pieces of first channel state indication information is input in parallel into one first the K second AI models. In such a design, a second encoder in which N is any number greater than 2 may be implemented by using a plurality of second AI models whose quantities of input ports are integers from 2 to N-1 and whose quantities of output ports are 1. In this way, the second encoder can be implemented by training several second AI models whose quantities of input ports are different. Therefore, the CSI feedback overheads are reduced, a quantity of second AI models that need to be trained is reduced, and a quantity of second AI models for implementing the second encoder can be reduced, improving an encoding speed. Optionally, K is 2.

Further, in a possible design, before the determining N pieces of first channel state indication information, the method further includes: obtaining a downlink reference signal; and determining the value of N and the channel information of the N downlink transport layers based on the downlink reference signal.

According to a second aspect, this disclosure provides a communication method, applied to an access network device and including: obtaining second channel state indication information; determining N pieces of first channel state indication information by using a second decoder and the second channel state indication information, where a sum of sequence lengths corresponding to the N pieces of first channel state indication information is greater than a sequence length corresponding to the second channel state indication information, and N is a positive integer greater than 1; and determining channel information of N downlink transport layers by using a first decoder and the N pieces of first channel state indication information input into the first decoder.

The foregoing design matches the first aspect, so that decompression can be performed twice on channel information obtained by performing compression twice, to restore corresponding channel information.

In a possible design, a range of the sequence length of the second channel state indication information corresponds to one or more of a structure of a second encoder, a structure of the second decoder matching the second encoder, or a structure of a second auto-encoder to which the second encoder belongs, and/or corresponds to a value of N. In other words, the range of the sequence length of the second channel state indication information may indicate one or more of the structure of the second encoder, the structure of the second decoder matching the second encoder, or the structure of the second auto-encoder to which the second encoder belongs, and/or the value of N. Therefore, the range of the sequence length of the second channel state indication information may be determined by comparing the sequence length of the second channel state indication information with a corresponding threshold, to determine one or more of the structure of the second encoder, the structure of the second decoder matching the second encoder, or the structure of the second auto-encoder to which the second encoder belongs, and/or the value of N.

In a possible design, a range of the sequence length of the second channel state indication information corresponds to one or more of a structure of a first encoder, a structure of the first decoder matching the first encoder, or a structure of a first auto-encoder to which the first encoder belongs, and/or corresponds to a value of N. In other words, the range of the sequence length of the second channel state indication information may indicate one or more of the structure of the first encoder, the structure of the first decoder matching the first encoder, or the structure of the first auto-encoder to which the first encoder belongs, and/or the value of N. Therefore, the range of the sequence length of the second channel state indication information may be determined by comparing the sequence length of the second channel state indication information with a corresponding threshold, to determine one or more of the structure of the first encoder, the structure of the first decoder matching the first encoder, or the structure of the first auto-encoder to which the first encoder belongs, and/or the value of N.

In a possible design, the method further includes: obtaining information indicating a rank, where a value of N is equal to a value of the rank. One or more of a structure of the second decoder, a structure of a second encoder matching the second decoder, or a structure of a second auto-encoder to which the second encoder belongs correspond to the value of N. One or more of a structure of the first decoder, a structure of a first encoder matching the first decoder, or a structure of a first auto-encoder to which the first encoder belongs also correspond to the value of N.

In a possible design, the method further includes: obtaining second information, where the second information indicates one or more of the following: a second encoder, a decoder matching the second encoder, and a second auto-encoder AE to which the second encoder belongs. In such a design, an information receiving party can quickly determine the second decoder matching the second encoder, improving decoding efficiency.

In a possible design, the method further includes: obtaining first information, where the first information indicates one or more of the following: a first encoder, a decoder matching the first encoder, and a first auto-encoder AE to which the first encoder belongs.

The following describes in detail the structure, an input, and/or an output of the second decoder.

In a possible design, the second decoder has a decompression function and a dequantization function. The second channel state indication information is input into the second decoder, and the output of the second decoder includes the N pieces of first channel state indication information. In this design, the structure of the second decoder may be understood with reference to the following several possible examples.

In a first possible example, the second decoder includes one third AI model. An input of the one third AI model includes the second channel state indication information, and an output of the one third AI model includes the N pieces of first channel state indication information.

In a second possible example, N is greater than 2, and the second decoder includes N-1 third AI models. An input of an $(N-1)^{th}$ third AI model in the N-1 third AI models includes the second channel state indication information, and an output of the $(N-1)^{th}$ third AI model includes an $(N-2)^{th}$ piece of fourth channel state indication information and an $N^{th}$ piece of first channel state indication information. An input of an $(N-i)^{th}$ third AI model includes an $(N-i)^{th}$ piece of fourth channel state indication information, and an output of the $(N-i)^{th}$ third AI model includes an $(N-i+1)^{th}$ piece of first channel state indication information in the N pieces of first channel state indication information and an $(N-i-1)^{th}$ piece of fourth channel state indication information. An input of a $1^{st}$ third AI model includes a $1^{st}$ piece of fourth channel state indication information, and an output of the $1^{st}$ third AI model includes a $1^{st}$ piece of first channel state indication information and a $2^{nd}$ piece of first channel state indication information in the N pieces of first channel state indication information, where i is a positive integer from 2 to N-2. It may be understood that neither N-i nor N-i-1 may be 0. The second channel state indication information is an $(N-1)^{th}$ piece of fourth channel state indication information.

In a third possible example, N is greater than 2, the second decoder includes K third AI models, K is a positive integer greater than 1 and less than N-1, and at least one of the K third AI models is used to restore at least two pieces of first channel state indication information in the N pieces of first channel state indication information.

In another possible design, the second decoder has a decompression function but not a dequantization function. After the second channel state indication information is obtained, the second channel state indication information may be first dequantized to obtain third channel state indication information. Then, the third channel state indication information is input into the second decoder, and the output of the second decoder includes the N pieces of first channel state indication information. In this design, the structure of the second decoder may be understood with reference to the following several possible examples.

In a first possible example, the second decoder includes one third AI model. An input of the one third AI model includes the third channel state indication information, and an output of the one third AI model includes the N pieces of first channel state indication information.

In a second possible example, N is greater than 2, and the second decoder includes N-1 third AI models. An input of an $(N-i)^{th}$ third AI model in the N-1 third AI models includes an $(N-i)^{th}$ piece of fourth channel state indication information.

An output of the (N-i)<sup>th</sup> third AI model includes at least one piece of information in the following information: an (N-i)<sup>th</sup> piece of first channel state indication information in the N pieces of first channel state indication information, an (N-i+1)<sup>th</sup> piece of first channel state indication information in the N pieces of first channel state indication information, and an (N-i-1)<sup>th</sup> piece of fourth channel state indication information, where i is a positive integer from 1 to N-1. The third channel state indication information is an (N-1)<sup>th</sup> piece of fourth channel state indication information. It may be understood that neither N-i nor N-i-1 may be 0. For example, when i is N-1, N-i-1 is calculated as 0. In this case, the output of the (N-i)<sup>th</sup> third AI model does not include the (N-i-1)<sup>th</sup> piece of fourth channel state indication information, but may include the (N-i)<sup>th</sup> piece of first channel state indication information and the (N-i+1)<sup>th</sup> piece of first channel state indication information in the N pieces of first channel state indication information.

In a third possible example, N is greater than 2, the second decoder includes K third AI models, K is a positive integer greater than 1 and less than N-1, and each of the K third AI models is used to restore some first channel state indication information in the N pieces of first channel state indication information.

The following describes in detail the structure, an input, and/or an output of the first decoder.

In a possible design, a function of the first decoder matches the first encoder. If the first encoder has a compression function and a quantization function, the first decoder may have a decompression function and a dequantization function; or if the first encoder may have a compression function but not a quantization function, the first decoder may have a decompression function but not a dequantization function.

In a possible design, the first decoder includes N fourth AI models, and the N pieces of first channel state indication information are respectively input into the N fourth AI models.

In another possible design, the first decoder includes one fourth AI model, and the N pieces of first channel state indication information are input in serial or parallel into the one fourth AI model. Alternatively, the first decoder includes M fourth AI models, M is an integer greater than 1 and less than N, and some first channel state indication information in the N pieces of first channel state indication information is input in serial or parallel into one fourth AI model in the M fourth AI models.

According to a third aspect, this disclosure provides a communication apparatus. The communication apparatus may be a terminal device, may be an apparatus, a module, a chip, or the like in a terminal device, or may be an apparatus that can be used together with a terminal device. In a design, the communication apparatus may include modules that are in one-to-one correspondence with the methods/operations/steps/actions described in the first aspect. The module may be implemented by a hardware circuit, software, or a combination of a hardware circuit and software. In a design, the communication apparatus may include a processing module and a communication module.

An example is as follows.

The processing module is configured to: determine N pieces of first channel state indication information by using a first encoder and channel information N downlink transport layers input into the first encoder, where N is a positive integer greater than 1; and determine second channel state indication information by using a second encoder and the N pieces of first channel state indication information input into the second encoder, where the second channel state indication information corresponds to the N downlink transport layers, and a sequence length corresponding to the second channel state indication information is less than a sum of sequence lengths corresponding to the N pieces of first channel state indication information.

The communication module is configured to send the second channel state indication information.

In a possible design, the communication module is further configured to send information indicating a rank, where a value of N is equal to a value of the rank. When the value of the rank is greater than 1, it may implicitly indicate that compression is performed twice on downlink channel information. For example, the information indicating the rank may be a rank indicator (rank indicator, RI).

In a possible design, one or more of a structure of the second encoder, a structure of a second decoder matching the second encoder, or a structure of a second auto-encoder to which the second encoder belongs correspond to the value of N. One or more of a structure of the first encoder, a structure of a first decoder matching the first encoder, or a structure of a first auto-encoder to which the first encoder belongs also correspond to the value of N. The foregoing information indicating the rank may be further used by a device that receives the information indicating the rank, to determine the structure of the second decoder and/or the structure of the first decoder.

In a possible design, the communication module is further configured to send second information, where the second information indicates one or more of the following: the second encoder, a decoder matching the second encoder, and a second auto-encoder AE to which the second encoder belongs.

In a possible design, the communication module is further configured to send first information, where the first information indicates one or more of the following: the first encoder, a decoder matching the first encoder, and a first auto-encoder AE to which the first encoder belongs.

The structure, an input, and/or an output of the first encoder may be understood with reference to the content in the first aspect. Details are not described again in this disclosure.

The structure, an input, and/or an output of the second encoder may be understood with reference to the content in the first aspect. Details are not described again in this disclosure.

Further, in a possible design, the processing module is further configured to: before determining the N pieces of first channel state indication information, obtain a downlink reference signal via the communication module, and determine the value of N and the channel information of the N downlink transport layers based on the downlink reference signal.

According to a fourth aspect, this disclosure provides a communication apparatus. The communication apparatus may be an access network device, may be an apparatus, a module, a chip, or the like in an access network device, or may be an apparatus that can be used together with an access network device. In a design, the communication apparatus may include modules that are in one-to-one correspondence with the methods/operations/steps/actions described in the second aspect. The module may be implemented by a hardware circuit, software, or a combination of a hardware circuit and software. In a design, the communication apparatus may include a processing module and a communication module.

An example is as follows.

The communication module is configured to obtain second channel state indication information.

The processing module is configured to: determine N pieces of first channel state indication information by using a second decoder and the second channel state indication information, where a sum of sequence lengths corresponding to the N pieces of first channel state indication information is greater than a sequence length corresponding to the second channel state indication information, and N is a positive integer greater than 1; and determine channel information of N downlink transport layers by using a first decoder and the N pieces of first channel state indication information input into the first decoder.

In a possible design, the communication module is further configured to obtain information indicating a rank, where a value of N is equal to a value of the rank. One or more of a structure of the second decoder, a structure of a second encoder matching the second decoder, or a structure of a second auto-encoder to which the second encoder belongs correspond to the value of N. One or more of a structure of the first decoder, a structure of a first encoder matching the first decoder, or a structure of a first auto-encoder to which the first encoder belongs also correspond to the value of N.

In a possible design, the communication module is further configured to obtain second information, where the second information indicates one or more of the following: a second encoder, a decoder matching the second encoder, and a second auto-encoder AE to which the second encoder belongs.

In a possible design, the communication module is further configured to obtain first information, where the first information indicates one or more of the following: a first encoder, a decoder matching the first encoder, and a first auto-encoder AE to which the first encoder belongs.

The structure, an input, and/or an output of the second decoder may be understood with reference to the content in the first aspect. Details are not described again in this disclosure.

The structure, an input, and/or an output of the first decoder may be understood with reference to the content in the first aspect. Details are not described again in this disclosure.

According to a fifth aspect, this disclosure provides a communication apparatus. The communication apparatus includes a processor, configured to implement the method described in the first aspect. The processor is coupled to a memory. The memory is configured to store instructions and data. When the processor executes the instructions stored in the memory, the method described in the first aspect may be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or a communication interface of another type.

In a possible design, the communication apparatus includes:

the memory, configured to store the instructions;

the processor, configured to: determine N pieces of first channel state indication information by using a first encoder and channel information of N downlink transport layers input into the first encoder, where N is a positive integer greater than 1; and determine second channel state indication information by using a second encoder and the N pieces of first channel state indication information input into the second encoder, where the second channel state indication information corresponds to the N downlink transport layers, and a sequence length corresponding to the second channel state indication information is less than a sum of sequence lengths corresponding to the N pieces of first channel state indication information; and

the communication interface, configured to send the second channel state indication information.

In a possible design, the first encoder and the second encoder are implemented in a form of a software function module. In another possible design, the first encoder and the second encoder may be implemented in a form of hardware (for example, a chip or a hardware circuit). The first encoder and the second encoder may be integrated into the processor, or may be independently deployed in the communication apparatus. In other words, the communication apparatus may further include the first encoder and the second encoder.

According to a sixth aspect, this disclosure provides a communication apparatus. The communication apparatus includes a processor, configured to implement the method described in the second aspect. The processor is coupled to a memory. The memory is configured to store instructions and data. When the processor executes the instructions stored in the memory, the method described in the second aspect may be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or a communication interface of another type.

In a possible design, the communication apparatus includes:

the memory, configured to store the instructions;
the communication interface, configured to obtain second channel state indication information; and
the processor, configured to: determine N pieces of first channel state indication information by using a second decoder and the second channel state indication information, where a sum of sequence lengths corresponding to the N pieces of first channel state indication information is greater than a sequence length corresponding to the second channel state indication information, and N is a positive integer greater than 1; and determine channel information of N downlink transport layers by using a first decoder and the N pieces of first channel state indication information input into the first decoder.

In a possible design, the second decoder and the first decoder are implemented in a form of a software function module. In another possible design, the second decoder and the first decoder may be implemented in a form of hardware (for example, a chip or a hardware circuit). The second decoder and the first decoder may be integrated into the processor, or may be independently deployed in the communication apparatus. In other words, the communication apparatus may further include the second decoder and the first decoder.

According to a seventh aspect, this disclosure provides a communication system. The communication system includes a terminal device and an access network device. Specifically, interaction between the terminal device and the access network device may be understood with reference to the following content.

The terminal device determines N pieces of first channel state indication information by using a first encoder and channel information of N downlink transport layers input into the first encoder, where N is a positive integer greater than 1. The terminal device determines second channel state indication information by using a second encoder and the N pieces of first channel state indication information input into the second encoder, where the second channel state indication information corresponds to the N downlink transport layers, and a sequence length corresponding to the second channel state indication information is less than a sum of sequence lengths corresponding to the N pieces of first channel state indication information.

The terminal device sends the second channel state indication information to the access network device. The access network device receives the second channel state indication information from the terminal device.

The access network device determines the N pieces of first channel state indication information by using a second decoder and the second channel state indication information, where N is a positive integer greater than 1. The access network device determines the channel information of the N downlink transport layers by using a first decoder and the N pieces of first channel state indication information input into the first decoder.

A solution implemented on a terminal device side may be understood with reference to the designs described in the first aspect. Similarly, a solution implemented on an access network device side may be understood with reference to the designs described in the second aspect. Details are not described again in this disclosure.

According to an eighth aspect, this disclosure provides a communication system, including the communication apparatus described in the third aspect or the fifth aspect and the communication apparatus described in the fourth aspect or the sixth aspect.

According to a ninth aspect, this disclosure further provides a computer program. When the computer program is run on a computer, the computer is enabled to perform the method provided in the first aspect or the second aspect.

According to a tenth aspect, this disclosure further provides a computer program product, including instructions. When the instructions are run on a computer, the computer is enabled to perform the method provided in the first aspect or the second aspect.

According to an eleventh aspect, this disclosure further provides a computer-readable storage medium. The computer-readable storage medium stores a computer program or instructions. When the computer program or the instructions are run on a computer, the computer is enabled to perform the method provided in the first aspect or the second aspect.

According to a twelfth aspect, this disclosure further provides a chip. The chip is configured to read a computer program stored in a memory, to perform the method provided in the first aspect or the second aspect. Alternatively, the chip includes a circuit configured to perform the method provided in the first aspect or the second aspect.

According to a thirteenth aspect, this disclosure further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effects of the solutions provided in any one of the second aspect to the thirteenth aspect, refer to the corresponding descriptions in the first aspect.

## BRIEF DESCRIPTION OF DRAWINGS

FIG. 1 is a diagram of a structure of a communication system;
FIG. 2A is a diagram of a neuron structure;
FIG. 2B is a diagram of a layer relationship of a neural network;
FIG. 2C is a diagram of an AI application framework according to this disclosure;
FIG. 3 is a diagram of a structure of another communication system;
FIG. 4A to FIG. 4D are diagrams of several network architectures;
FIG. 5 is one of schematic flowcharts of a communication method according to this disclosure;
FIG. 6A is one of schematic flowcharts of encoding and decoding according to this disclosure;
FIG. 6B is one of schematic flowcharts of encoding and decoding according to this disclosure;
FIG. 6C is one of schematic flowcharts of encoding and decoding according to this disclosure;
FIG. 7 is one of schematic flowcharts of a communication method according to this disclosure;
FIG. 8A is one of schematic flowcharts of encoding and decoding according to this disclosure;
FIG. 8B is one of schematic flowcharts of encoding and decoding according to this disclosure;
FIG. 8C is one of schematic flowcharts of encoding and decoding according to this disclosure;
FIG. 9 is one of schematic flowcharts of encoding and decoding according to this disclosure;
FIG. 10 is one of diagrams of a structure of a communication apparatus according to this disclosure; and
FIG. 11 is one of diagrams of a structure of a communication apparatus according to this disclosure.

## DESCRIPTION OF EMBODIMENTS

To make the objectives, technical solutions, and advantages of this disclosure clearer, the following further describes this disclosure in detail with reference to the accompanying drawings.

"At least one piece (item)" described in this disclosure below indicates one piece (item) or more pieces (items). "A plurality of pieces (items)" indicates two pieces (items) or more than two pieces (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in this disclosure to describe objects, these objects are not limited by these terms. These terms are merely used to distinguish objects from each other.

Terms "include" and "have" and any variant thereof mentioned in descriptions of this disclosure below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this disclosure, the term such as "example" or "for example" represents giving an example, an illustration, or a description. Any method or design solution described in this disclosure as "example" or "for example" should not be construed as being more preferred or advantageous over another method or design solution. To be precise, use of the word such as "example" or "for example" is intended to present a related concept in a specific manner.

Technologies provided in this disclosure may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may also send signals to each other. In other words, both a signal sending network element and a signal receiving network element may be terminal devices.

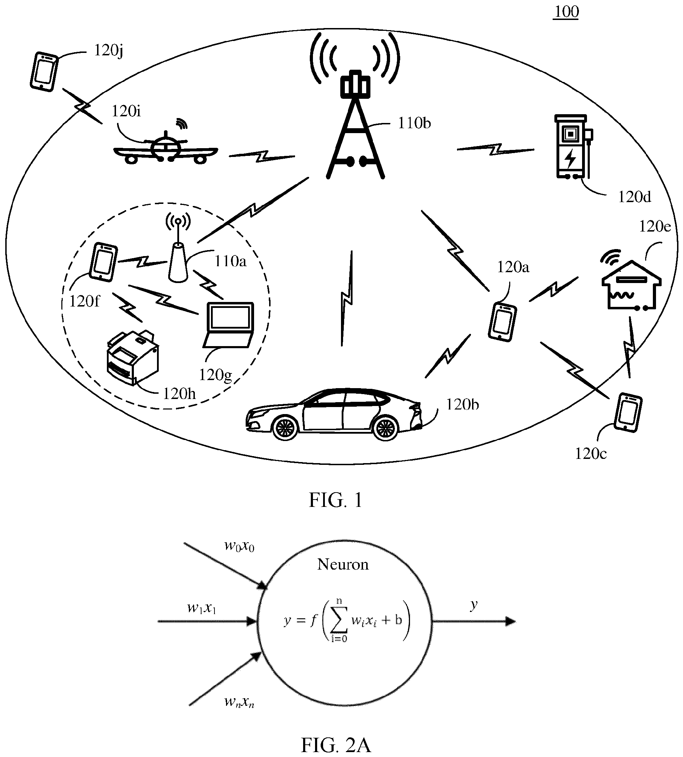

An information generation method provided in embodiments of this application may be applied to a wireless communication system such as 5G, 6G, or satellite communication. FIG. 1 is a simplified diagram of the wireless communication system according to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 1 is only a diagram. The wireless communication system may further include another device, for example, may further include a core network device, a wireless relay device, and/or a wireless backhaul device, which are not shown in FIG. 1.

Optionally, in actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to send or receive a signal on a network side. The network device may be an access device via which the communication device accesses the wireless communication system in a wireless manner. For example, the network device may be a base station. The base station may cover the following names in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission point (transmitting and receiving point, TRP), a transmitting point (transmitting point, TP), a master station MeNB, a secondary station SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (Device-to-Device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

The network device may be fixed or mobile. For example, the base stations 110a and 110b are stationary and are responsible for wireless transmission and reception in one or more cells from the communication device 120. A helicopter or uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this disclosure, a communication apparatus configured to implement functions of the access network may be an access network device, may be a network device having some functions of the access network, or may be an apparatus that can support implementation of the functions of the access network, for example, a chip system, a hardware circuit, a software module, or a combination of a hardware circuit and a software module. The apparatus may be installed in the access network device or used together with the access network device. In the method disclosed in this disclosure, an example in which the communication apparatus configured to implement the function of the access network device is the access network device is used for description.

The communication device may be an entity, for example, a mobile phone, configured to receive or send a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, autonomous driving, remote medical, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the communication device 120 are 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in the smart grid (smart grid), a wireless terminal in transportation safety (transportation safety), a wireless terminal such as a smart fueler in the smart city (smart city), a terminal device on a high-speed railway, and a wireless terminal such as a smart speaker, a smart coffee machine, and a smart printer in a smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, user equipment (user equipment, UE), a mobile station (mobile station, MS), a mobile terminal (mobile terminal, MT), or the like. The communication device may alternatively be a communication device in a future wireless communication system. The communication device may be used in a dedicated network device, a general-purpose device, or the like. A specific technology and a specific device form used by the communication device are not limited in embodiments of this application.

Optionally, the communication device may be configured to serve as a base station. For example, the UE may serve as a scheduling entity that provides sidelink signals between UEs in V2X, D2D, P2P, or the like. As shown in FIG. 1, the cellular phone 120a and a car 120b communicate with each other by using sidelink signals. The cellular phone 120a communicates with a smart home device 120e without relaying a communication signal via the base station 110b.

In this disclosure, a communication apparatus configured to implement functions of the communication device may be a terminal device, may be a terminal device having some functions of the communication device, or may be an apparatus that can support implementation of the functions of the communication device, for example, a chip system. The apparatus may be installed in the terminal device or used together with the terminal device. In this disclosure, the chip system may include a chip, or may include a chip and another discrete component. In the technical solutions provided in this disclosure, an example in which the communication apparatus is a terminal device or UE is used for description.

Optionally, the wireless communication system generally includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

It may be understood that this disclosure may be applied between a network device and a communication device, between network devices, or between communication devices, that is, between a primary device and a secondary device. The primary device may be a network device or a communication device. When the primary device is a network device, the secondary device may be another network device or a communication device. When the primary device is a communication device, the secondary device may be another communication device.

The following describes the solutions by using an example in which the primary device is a network device, for example, an access network device, and the secondary device is a communication device, for example, a terminal device. A communication direction corresponding to downlink is sending from the primary device to the secondary device, and a communication direction corresponding to uplink is sending from the secondary device to the primary device.

Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. Data transmission needs to pass through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed via the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, and sequentially transmit the data to the physical layer, and the data is sent to another communication apparatus. The non-access stratum may be used to forward user data, for example, forward uplink data received from the application layer to the SDAP layer or forward downlink data received from the SDAP layer to the application layer.

Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be defined based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that the foregoing processing function division of the CU and the DU based on the protocol layers is merely an example, and there may be other division. For example, the CU or the DU may have functions of more protocol layers through division. For another example, the CU or the DU may have some processing functions of the protocol layers through division. In a design, some functions of an RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, an RU of the DU is disposed remotely. The RU has a radio frequency function.

Optionally, the DU and the RU may be distinguished at a physical layer (physical layer, PHY). For example, the DU may implement a higher-layer function of the PHY layer, and the RU may implement a lower-layer function of the PHY layer. When used for sending, a function of the PHY layer may include cyclic redundancy check (cyclic redundancy check, CRC) code addition, channel encoding, rate matching, scrambling, modulation, layer mapping, precoding, resource mapping, physical antenna mapping, and/or radio frequency sending functions. When used for receiving, a function of the PHY layer may include CRC, channel decoding, rate de-matching, descrambling, demodulation, layer de-mapping, channel detection, resource de-mapping, physical antenna de-mapping, and/or radio frequency receiving functions. The higher-layer function of the PHY layer may include some functions of the PHY layer. For example, the some functions are closer to the MAC layer. The lower-layer function of the PHY layer may include some other functions of the PHY layer. For example, the some other functions are closer to a radio frequency function. For example, the higher-layer function of the PHY layer may include CRC code addition, channel encoding, rate matching, scrambling, modulation, and layer mapping, and the lower-layer function of the PHY layer may include the precoding, resource mapping, physical antenna mapping, and radio frequency sending functions. Alternatively, the higher-layer function of the PHY layer may include CRC code addition, channel encoding, rate matching, scrambling, modulation, layer mapping, and precoding, and the lower-layer function of the PHY layer may include the resource mapping, physical antenna mapping, and radio frequency sending functions.

For example, a function of the CU may be implemented by one entity, or may be implemented by different entities. For example, the function of the CU may be further divided. To be specific, a control plane and a user plane are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete functions of the access network device.

In the foregoing architecture, signaling generated by the CU may be sent to a terminal device via the DU, or signaling generated by a terminal device may be sent to the CU via the DU. For example, signaling at an RRC layer or the PDCP layer is finally processed into signaling at the physical layer and sent to the terminal device, or is converted from signaling received from the physical layer. In this architecture, signaling at the RRC layer or the PDCP layer may be considered as being sent via the DU or being sent via the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this disclosure.

It should be understood that a quantity and a type of each device in the communication system shown in FIG. 1 are merely used as an example, and this disclosure is not limited thereto. In actual application, the communication system may further include more terminal devices and more access network devices, and may further include another network element, for example, may include a core network device and/or a network element configured to implement an artificial intelligence function.

The method provided in this disclosure may be used for communication between the access network device and the terminal device, and may also be used for communication between other communication devices, for example, communication between a macro base station and a micro base station in a wireless backhaul link, or communication between two terminal devices in a sidelink (sidelink, SL). This is not limited.

The following describes a CSI feedback technology in this disclosure. In the foregoing communication system, for example, an LTE or NR system, an access network device needs to obtain channel state information CSI of a downlink channel, and determines, based on the CSI, configurations such as a resource, a modulation and coding scheme (modulation and coding scheme, MCS), and precoding for scheduling a downlink data channel of a terminal device. It may be understood that the CSI is channel information, and is information that can reflect a channel characteristic and channel quality. The channel information may also be referred to as a channel response. For example, the CSI may be represented by using a channel matrix. For example, the CSI includes the channel matrix, or the CSI may include an eigenvector of the channel.

In a frequency division duplex (frequency division duplex, FDD) communication scenario, because uplink and downlink channels do not have reciprocity or reciprocity between uplink and downlink channels cannot be ensured, the access network device usually sends a downlink reference signal to the terminal device. The terminal device performs channel measurement and interference measurement based on the received downlink reference signal, to estimate downlink channel information. The downlink channel information includes CSI. Then, the CSI is fed back to the access network device.

In a conventional CSI feedback manner, the terminal device may generate a CSI report based on the estimated CSI in a manner predefined or configured by the access network device, and feed back the CSI report to the access network device. The downlink reference signal includes a channel state information-reference signal (channel state information-reference signal, CSI-RS) or a synchronization signal block (synchronization signal/physical broadcast channel block, SSB). The CSI report includes a feedback quantity, for example, a rank indicator (rank indicator, RI), a channel quality indicator (channel quality indicator, CQI), and a precoding matrix indicator (precoding matrix indicator, PMI). The RI indicates a quantity of downlink transport layers recommended by the terminal device. The CQI indicates a modulation and coding scheme that is determined by the terminal device and that can be supported by a current channel condition. The PMI indicates precoding recommended by the terminal device. A quantity of precoding layers indicated by the PMI corresponds to the RI. For example, if the RI is 1, the PMI indicates single-layer precoding; or if the RI is N, the PMI indicates N-layer precoding, where N is a positive integer greater than 1. It may be understood that N precoding layers respectively correspond to N downlink transport layers indicated by the RI. It can be learned that a larger quantity of downlink transport layers indicated by the RI indicates higher PMI feedback overheads.

Generally, there is common information between a plurality of precoding layers, or the common information is described as shared information, same information, or the like. Therefore, the common information is considered when the PMI in the CSI report is fed back, which can reduce some PMI feedback overheads. In an example, a PMI indicating single-layer precoding is referred to as a single-layer PMI for short, and a PMI indicating N-layer precoding is referred to as an N-layer PMI for short. The following describes common information and independent information at each layer in the single-layer to four-layer PMIs by using $i_1$ and $i_2$.

$$i_1 = \left\{ \begin{array}{l} [i_{1,1} \quad i_{1,2} \quad i_{1,5} \quad i_{1,6,1} \quad i_{1,7,1} \quad i_{1,8,1}] \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2}] \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3}] \\ [i_{1,1} \quad i_{1,2} \quad i_{1,5} \quad i_{1,6,1} \quad i_{1,7,1} \quad i_{1,8,1} \quad i_{1,6,2} \quad i_{1,7,2} \quad i_{1,8,2} \quad i_{1,6,3} \quad i_{1,7,3} \quad i_{1,8,3} \quad i_{1,6,4} \quad i_{1,7,4} \quad i_{1,8,4}] \end{array} \right\}$$

$$i_2 = \left\{ \begin{array}{l} [i_{2,3,1} \quad i_{2,4,1} \quad i_{2,5,1}] \\ [i_{2,3,1} \quad i_{2,4,1} \quad i_{2,5,1} \quad i_{2,3,2} \quad i_{2,4,2} \quad i_{2,5,2}] \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3}] \\ [i_{2,3,1} \quad i_{2,4,1} \quad i_{2,5,1} \quad i_{2,3,2} \quad i_{2,4,2} \quad i_{2,5,2} \quad i_{2,3,3} \quad i_{2,4,3} \quad i_{2,5,3} \quad i_{2,3,4} \quad i_{2,4,4} \quad i_{2,5,4}] \end{array} \right\}$$

In $i_1$ and $i_2$, 1st rows correspond to the single-layer PMI, 2nd rows correspond to a two-layer PMI, 3rd rows correspond to a three-layer PMI, and 4th rows correspond to the four-layer PMI. The four-layer PMI is used as an example. It may be understood that $i_{1,1}$, $i_{1,2}$, and $i_{1,5}$ are common information between four precoding layers. $i_{1,1}$ represents DFT spatial basis selection. $i_{1,2}$ represents spatial oversampling selection. $i_{1,5}$ represents DFT frequency domain basis subset selection. $i_{1,6,l}, i_{1,7,l}, i_{1,8,l}$ and $i_{2,3,l}, i_{2,4,l}, i_{2,5,l}$ are independent information at an $l^{th}$ layer in the fourth layers, where $l$ is a positive integer from 1 to 4. $i_{1,6,l}$ represents frequency domain basis selection at the $l^{th}$ layer. $i_{1,7,l}$ represents a non-zero sparse bitmap (bitmap) at the $l^{th}$ layer. $i_{1,8,l}$ represents a strongest coefficient at the $l^{th}$ layer. $i_{2,3,l}, i_{2,4,l}, i_{2,5,l}$ represents an amplitude and a phase coefficient at the $l^{th}$ layer.

Artificial intelligence (artificial Intelligence, AI) is introduced into a wireless communication network, and an AI-based CSI feedback manner is formed. The terminal device compresses and feeds back the CSI by using an AI model, and the access network device restores the compressed CSI by using an AI model. A sequence (for example, a bit sequence) is transmitted in AI-based CSI feedback, and overheads are lower than overheads of a conventional CSI report feedback.

Currently, when the terminal device feeds back CSI of a plurality of downlink transport layers, the CSI of the plurality of downlink transport layers is usually considered as mutually independent information. For each of the plurality of downlink transport layers, the terminal device independently compresses and feeds back CSI of the layer by using an AI model. Correspondingly, the access network device receives the compressed CSI corresponding to each of the plurality of downlink transport layers. Then, the access network device restores the compressed CSI corresponding to the plurality of downlink transport layers. Such a design of independently compressing and feeding back CSI of a plurality of layers causes repeated transmission of some common information (for example, DFT spatial basis selection, spatial oversampling selection, and DFT frequency domain basis subset selection) in the CSI of the plurality of layers, resulting in a waste of resources.

Based on this, this disclosure provides a communication method and apparatus. After the CSI of the plurality of layers is separately compressed, the common information in the CSI that is compressed at one time and that is of the plurality of layers is compressed by using an AI model, so that a waste of resources for repeatedly transmitting the common information is reduced, and CSI feedback overheads are reduced. The communication method may be applied to the foregoing communication system, for example, the FDD communication scenario. In addition, optionally, the communication method may be further applied to a time division duplex (time division duplex, TDD) communication scenario. This is not limited in this disclosure.

For ease of understanding, the following first describes an AI technology in this disclosure. It may be understood that the description is not intended to limit this disclosure.

(1) AI model

An AI model is a specific implementation of an AI function. The AI model represents a mapping relationship between an input and an output of a model. A type of the AI model may be a neural network, a linear regression model, a decision tree model, a support vector machine (support vector machine, SVM), a Bayesian network, a Q-learning model, or another machine learning (machine learning, ML) model.

This disclosure relates to an encoder configured to compress CSI and a decoder configured to restore compressed CSI. The encoder and the decoder need to be used together. It may be understood that the encoder and the decoder are matching AI models. In this disclosure, one encoder may include one or more AI models, and a decoder matching the encoder also includes one or more AI models, where the AI models included in the encoder are the same in quantity as and in one-to-one correspondence with the AI models included in the decoder matching the encoder.

In a possible design, a set of encoder (encoder) and decoder (decoder) that are used together may be specifically two parts of a same auto-encoder (auto-encoder, AE). The auto-encoder is an unsupervised learning neural network, and is characterized by using input data as label data. Therefore, the auto-encoder may also be understood as a self-supervised learning neural network. The auto-encoder may be configured to compress and restore data. For example, the encoder in the auto-encoder may perform compression (encoding) processing on data A to obtain data B, and the decoder in the auto-encoder may perform decompression (decoding) processing on the data B to restore the data A. Alternatively, it may be understood that the decoder performs an inverse operation of the encoder.

(2) Neural network

A neural network is a specific implementation form of an AI or machine learning technology. According to a universal approximation theorem, the neural network can theoretically approximate any continuous function, so that the neural network has a capability of learning any mapping.

An idea of the neural network is from a neuron structure of brain tissue. For example, each neuron performs a weighted summation operation on input values of the neuron, and outputs an operation result based on an activation function. FIG. 2A is a diagram of a neuron structure. It is assumed that inputs of the neuron are $x = [x_0, x_1, ..., x_n]$, and weights corresponding to the inputs are $w = [w, w_1, ..., w_n]$, where $w_i$ is used as a weight of $x_i$ to weight $x_i$. An offset for performing weighted summation on the input values based on the weights is, for example, b. There may be a plurality of forms of the activation function. It is assumed that an activation function of a neuron is $y = f(z) = \max(0, z)$, and an output of the neuron is $y = f\left(\sum_{i=0}^{i=n} w_i * x_i + b\right) = \max\left(0, \sum_{i=0}^{i=n} w_i * x_i + b\right)$. For another example, an activation function of a neuron is $y = f(z) = z$, and an output of the neuron is $y = f\left(\sum_{i=0}^{i=n} w_i * x_i + b\right) = \sum_{i=0}^{i=n} w_i * x_i + b$, + b, where b, $w_i$, and $x_i$ may be various possible values such as a decimal, an integer (for example, 0, a positive integer, or a negative integer), or a complex number. Activation functions of different neurons in the neural network may be the same or different.

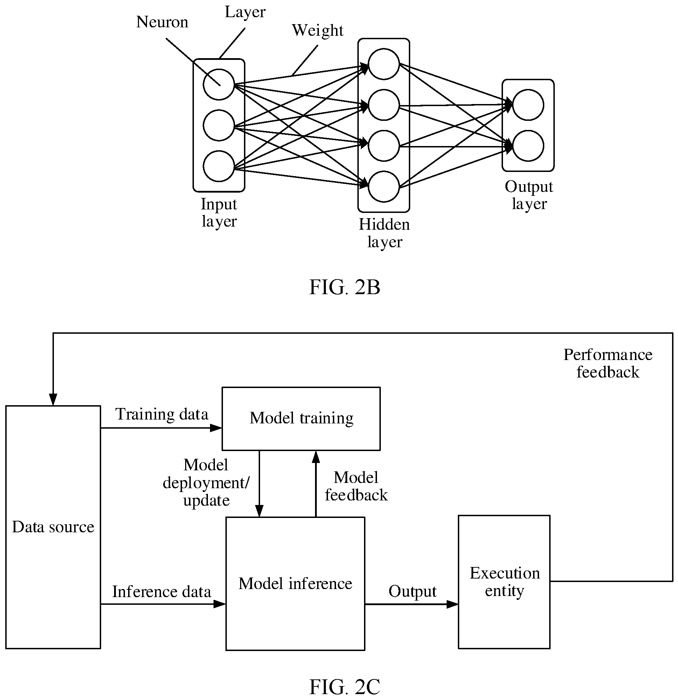

The neural network generally includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to FIG. 2B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

For example, the type of the AI model is a neural network. The AI model in this disclosure may be a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

(3) Training dataset and inference data

A training dataset is used for training an AI model. The training dataset may include an input of the AI model, or include an input and a target output of the AI model. The training dataset includes one or more pieces of training data. The training data may be a training sample input into the AI model, or may be the target output of the AI model. The target output may also be referred to as a label or a label sample. The training dataset is one of important parts of machine learning. In essence, model training is to learn some features from the training data, so that an output of the AI model is as close as possible to the target output, for example, a difference between the output of the AI model and the target output is minimized. The composition and selection of the training dataset can determine performance of a trained AI model to some extent.

In addition, a loss function may be defined in a training process of the AI model (for example, a neural network).

The loss function describes a gap or difference between an output value of the AI model and a target output value. A specific form of the loss function is not limited in this disclosure. The training process of the AI model is a process in which a model parameter of the AI model is adjusted, so that a value of the loss function is less than a threshold, or a value of the loss function meets a target requirement. For example, the AI model is a neural network, and adjusting a model parameter of the neural network includes adjusting at least one of the following parameters: a quantity of layers and a width of the neural network, a weight of a neuron, or a parameter in an activation function of a neuron.

Inference data may be used as an input of a trained AI model for AI model inference. During model inference, the inference data is input into an AI model, to obtain a corresponding output, that is, an inference result.

(4) AI model design

An AI model design mainly includes a data collection phase (for example, collection of training data and/or inference data), a model training phase, and a model inference phase. Further, an inference result application phase may be included. FIG. 2C shows an AI application framework. In the foregoing data collection phase, a data source (data source) is used to provide a training dataset and the inference data. In the model training phase, the training data (training data) provided by the data source is analyzed or trained to obtain an AI model. The AI model represents a mapping relationship between an input and an output of a model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input into the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, an access network device, or a terminal device) for execution. For another example, the execution entity may further feed back performance of the model to the data source, to facilitate subsequent model update training.

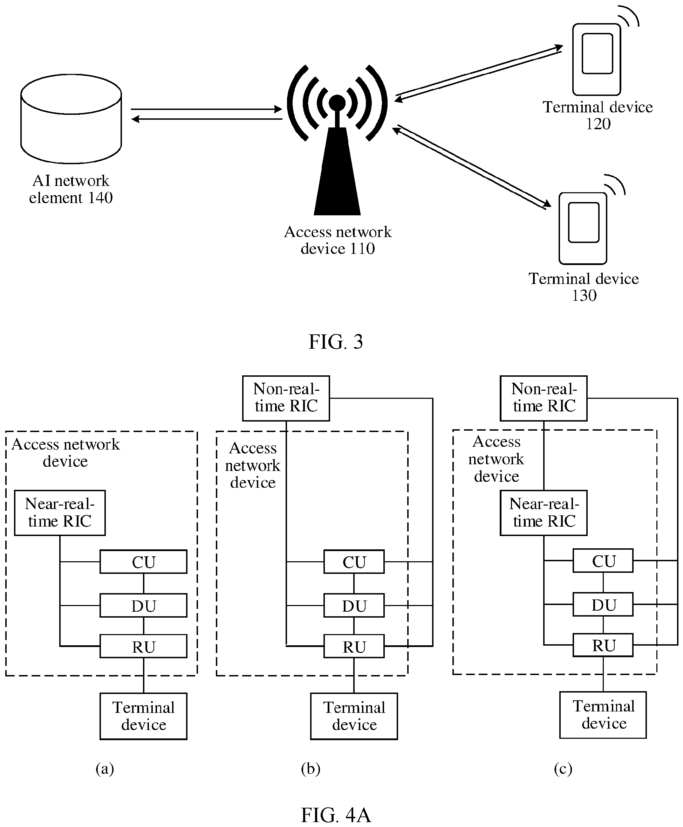

It may be understood that the communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system may classify network management work into three types based on an actual requirement of network operation of an operator: operation (Operation), administration (Administration), and maintenance (Maintenance). The network management system may also be referred to as an operation administration and maintenance (operation administration and maintenance, OAM) network element, OAM for short. Operation mainly refers to routine analysis, prediction, planning, and configuration for networks and services. Maintenance mainly refers to routine operation activities such as network and service tests and fault management. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. The name is not limited in this disclosure. The AI network element may be directly connected to the access network device in the communication system, or may be indirectly connected to the access network device via a third-party network element. The third-party network element may be a core network element such as an authentication management function (authentication management function, AMF) network element and a user plane function (user plane function, UPF) network element, OAM, a cloud server, or another network element. This is not limited. For example, refer to FIG. 3. An AI network element 140 is introduced into the communication system shown in FIG. 1.

In this disclosure, one parameter or a plurality of parameters may be obtained through inference by using one model. Learning processes of different models may be deployed on different devices or nodes, or may be deployed on a same device or node. Inference processes of different models may be deployed on different devices or nodes, or may be deployed on a same device or node. For example, the terminal device completes the model training phase, and after training an encoder and decoder that can be trained together, the terminal device may send a model parameter of the decoder to the access network device. For example, the access network device completes the model training phase, and after training an encoder and decoder that can be trained together, the access network device may indicate a model parameter of the encoder to the terminal device. For example, an independent AI network element completes the model training phase, and after training an encoder and decoder that can be trained together, the AI network element may send a model parameter of the encoder to the terminal device, and send a model parameter of the decoder to the access network device, so that a model inference phase corresponding to the encoder is performed on the terminal device, and a model inference phase corresponding to the decoder is performed on the access network device.

The model parameter may include one or more of the following: a structure parameter of the model (for example, a quantity of layers and/or a weight of the model), an input parameter of the model (for example, an input dimension and a quantity of input ports), or an output parameter of the model (for example, an output dimension and a quantity of output ports). It may be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

Further, this disclosure further provides several network architectures shown in FIG. 4A to FIG. 4D. An example in which model training and/or inference are/is performed in an access network device is used, and division is performed in the access network device to obtain function modules for model training and/or inference.

As shown in (a) in FIG. 4A, in a first possible implementation, the access network device includes a near-real-time radio access network intelligent controller (RAN intelligent controller, RIC) module, configured to perform model learning and/or inference. For example, the near-real-time RIC may obtain information on a network side and/or a terminal side from at least one of a CU, a DU, or an RU, where the information may include training data or inference data. For example, the near-real-time RIC may be configured to perform model training, and may further perform inference by using a trained model. In addition, optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU.

As shown in (b) in FIG. 4A, in a second possible implementation, in a communication system, a non-real-time RIC may be included outside the access network device. Optionally, the non-real-time RIC may be located in OAM or a core network device. The non-real-time RIC is configured to perform model learning and inference. For example, the non-real-time RIC may obtain information on a network side and/or a terminal side from at least one of a CU, a DU, and an RU, where the information may include training data or inference data. For example, the non-real-time RIC is configured to perform model training, and may further perform inference by using a trained model. In addition, optionally, the non-real-time RIC may submit an inference result to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU.

As shown in (c) in FIG. 4A, in a third possible implementation, the access network device includes a near-real-time RIC, and a non-real-time RIC is further included outside the access network device. Optionally, the non-real-time RIC may be located in OAM or a core network device. In a possible design, the non-real-time RIC may be configured to perform model training. The near-real-time RIC may obtain a model parameter of a trained AI model from the non-real-time RIC, obtain information on a network side and/or a terminal side from at least one of a CU, a DU, and an RU, and obtain an inference result by using the information and the trained AI model. Further, the near-real-time RIC may further submit the inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. Alternatively, in a possible design, the near-real-time RIC is configured to perform model training and perform inference by using a trained model, and the non-real-time RIC does not participate in model training or inference. Alternatively, the non-real-time RIC is configured to perform model training and perform inference by using a trained model, and the near-real-time RIC does not participate in model training or inference. Alternatively, in a possible design, the near-real-time RIC is configured to perform model training and send a model parameter of a trained AI model to the non-real-time RIC, and the non-real-time RIC performs inference by using the trained model.

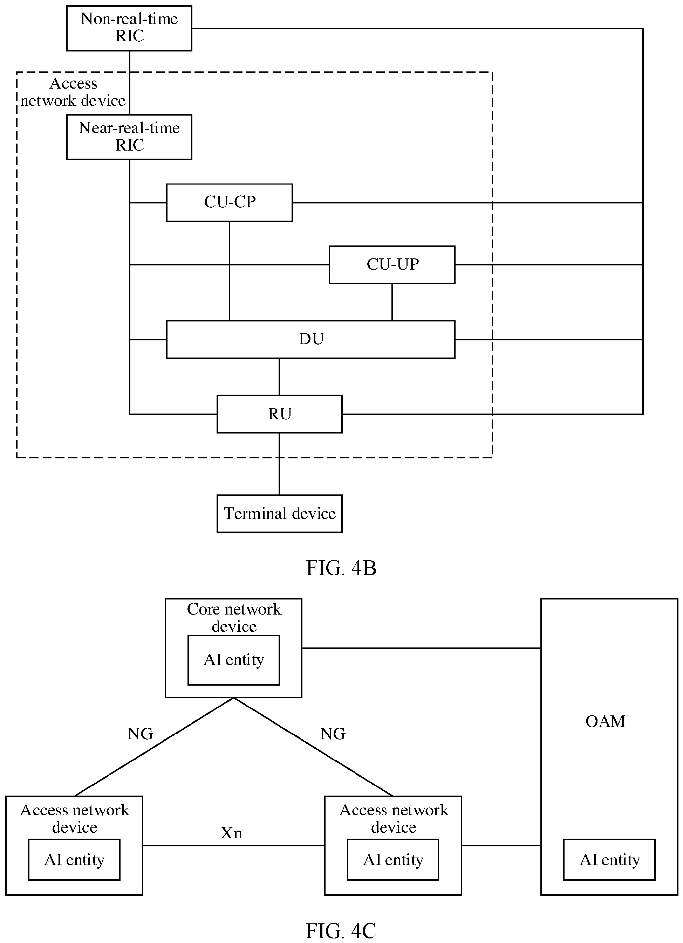

FIG. 4B is an example diagram of a network architecture to which a method provided in this disclosure can be applied. In comparison with (c) in FIG. 4A, in FIG. 4B, a CU is separated into a CU-CP and a CU-UP.

FIG. 4C is an example diagram of a network architecture to which a method provided in this disclosure can be applied. As shown in FIG. 4C, optionally, the access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by the AI entities of the OAM and the core network device are different, and/or models for inference are different. In this disclosure, that the models are different includes at least one of the following: structure parameters of the models (for example, quantities of layers and/or weights of the models) are different, input parameters of the models are different, or output parameters of the models are different.

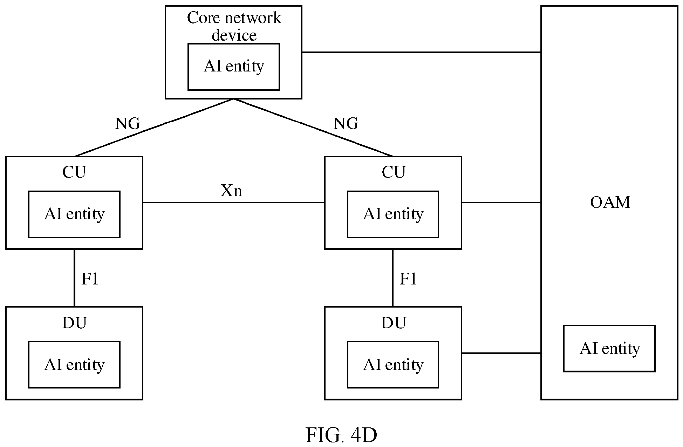

FIG. 4D is an example diagram of a network architecture to which a method provided in this disclosure can be applied. In comparison with FIG. 4C, the access network device in FIG. 4D is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each include an AI entity, models obtained through training by the AI entities of the CU and the DU are different, and/or models for inference are different. Optionally, the CU in FIG. 4D may be further split into a CU-CP and a CU-UP. Optionally, one or more AI models may be deployed in the CU-CP, and/or one or more AI models may be deployed in the CU-UP. Optionally, in FIG. 4C or FIG. 4D, OAM of the access network device and OAM of a core network device may be separately and independently deployed.

The following further describes in detail a training process and an inference process of an AI model in this disclosure.

This disclosure relates to CSI compression in two phases. In a first phase, a terminal device separately compresses CSI of a plurality of layers by using a first encoder. In a second phase, the terminal device compresses a result in the first phase by using a second encoder. Correspondingly, decompression of two phases is also needed on an access network device side. For example, an access network device first performs decompression by using a second decoder matching the second encoder, and then decompresses an output of the second decoder by using a first decoder matching the first encoder.

The first encoder and the first decoder are used and trained together. It may be understood that a quantity of AI models included in the first encoder is the same as a quantity of AI models included in the first decoder, and each AI model in the first encoder has a corresponding matching AI model in the first decoder. A training dataset used to train the first encoder and the first decoder includes a training sample and a sample label, where the training sample is channel information of a downlink transport layer determined by the terminal device, and the sample label is real channel information of the downlink transport layer. When the first encoder and the first decoder belong to a same auto-encoder, training data includes only the training sample, or the training sample is the sample label, that is, the channel information of the downlink transport layer.

The first encoder and the first decoder may be specific to a specific downlink transport layer. For example, a pair of first encoder and first decoder is trained by using channel information of a plurality of first downlink transport layers, and this pair of first encoder and first decoder is dedicated to processing the channel information of the first downlink transport layer. Another pair of first encoder and first decoder is trained by using channel information of a plurality of second downlink transport layers, and this pair of first encoder and first decoder is dedicated to processing the channel information of the second downlink transport layer. Alternatively, the first encoder and the first decoder may be universal to a plurality of downlink transport layers. For example, a pair of first encoder and first decoder is trained by using channel information of a plurality of first downlink transport layers and channel information of a second downlink transport layer, and this pair of first encoder and first decoder may be configured to process the channel information of the first downlink transport layer, and may be further configured to process the channel information of the second downlink transport layer.

A specific training process is as follows: A model training node processes channel information of a downlink transport layer, that is, a training sample, by using the first encoder, to obtain first channel state indication information corresponding to the downlink transport layer, and processes the first channel state indication information by using the first decoder, to obtain restored channel information of the downlink transport layer. A sequence length of the first channel state indication information may be a first target length. Optionally, there may be one or more first target lengths. Further, a difference between the restored channel information of the downlink transport layer and a corresponding sample label is calculated, that is, a value of a loss function, and parameters of the first encoder and the first decoder are updated based on the value of the loss function, to minimize the difference between the restored channel information of the downlink transport layer and the corresponding sample label, that is, to minimize the loss function. For example, the loss function may be a minimum mean square error (mean square error, MSE) or a cosine similarity. The foregoing operations are repeated for a plurality of first target lengths, to obtain a first encoder and a first decoder that meet a target requirement and that are obtained through training, that is, obtained after training is completed. The target requirement includes one or more of a target length and/or restoration accuracy. The model training node may be the terminal device, the access network device, or another network element having an AI function in a communication system. Further, if the model training node is the terminal device, a model parameter of the first decoder may be sent to the access network device; if the model training node is the access network device, a model parameter of the first encoder may be sent to the terminal device; or if the model training node is another network element other than the terminal device and the access network device, a model parameter of the first encoder may be sent to the terminal device, and a model parameter of the first decoder may be sent to the access network device.

Similarly, the second encoder and the second decoder are used and trained together. It may be understood that a quantity of AI models included in the second encoder is the same as a quantity of AI models included in the second decoder, and each AI model in the second encoder has a corresponding matching AI model in the second decoder. Because the second encoder compresses a result of the first encoder, the second encoder and the second decoder cannot be used independently of the first encoder and the first decoder, that is, the second encoder and the second decoder need to be trained together with the first encoder and the first decoder. In a possible design, the second encoder and the second decoder belong to a same auto-encoder.

The second encoder and the second decoder may be trained together with a trained first encoder and first decoder, or may be trained together with an untrained first encoder and first decoder. In a process of training the second encoder and the second decoder, the first encoder and the first decoder may be fixed, and only the second encoder and the second decoder are trained; or the second encoder and the second decoder may be jointly trained, and the first encoder and the second decoder may be jointly trained.

For example, the second encoder and the second decoder each include one AI model. A specific training process is as follows: A model training node processes channel information of N downlink transport layers by using the first encoder, to obtain N pieces of first channel state indication information, processes the N pieces of first channel state indication information by using the second encoder, to obtain second channel state indication information, processes the second channel state indication information by using the second decoder, to obtain restored N pieces of first channel state indication information, and processes the restored N pieces of first channel state indication information by using the first decoder, to obtain restored channel information of the N downlink transport layers. A sequence length of the second channel state indication information may be a second target length. Optionally, there may be one or more second target lengths. A difference between the restored channel information of the N downlink transport layers and a corresponding sample label is calculated, that is, a value of a loss function, and parameters of the second encoder and the second decoder are updated based on the value of the loss function, or parameters of the second encoder and the second decoder and parameters of the first encoder and the first decoder are updated, to minimize the difference between the restored channel information of the N downlink transport layers and the corresponding sample label, that is, to minimize the value of the loss function. For example, the loss function may be a minimum mean square error (MSE) or a cosine similarity. The foregoing operations are repeated for a plurality of second target lengths, to obtain a second encoder and second decoder that meet a target requirement and that are obtained through training, that is, obtained after training is completed. The target requirement includes one or more of a target length and/or restoration accuracy. The model training node may be the terminal device, the access network device, or another network element having an AI function in a communication system. Further, if the model training node is the terminal device, a model parameter of the second decoder may be sent to the access network device; if the model training node is the access network device, a model parameter of the second encoder may be sent to the terminal device; or if the model training node is another network element other than the terminal device and the access network device, a model parameter of the second encoder may be sent to the terminal device, and a model parameter of the second decoder may be sent to the access network device.

The following describes in detail an inference process of an AI model in this disclosure with reference to Solution 1 and Solution 2.

Solution 1

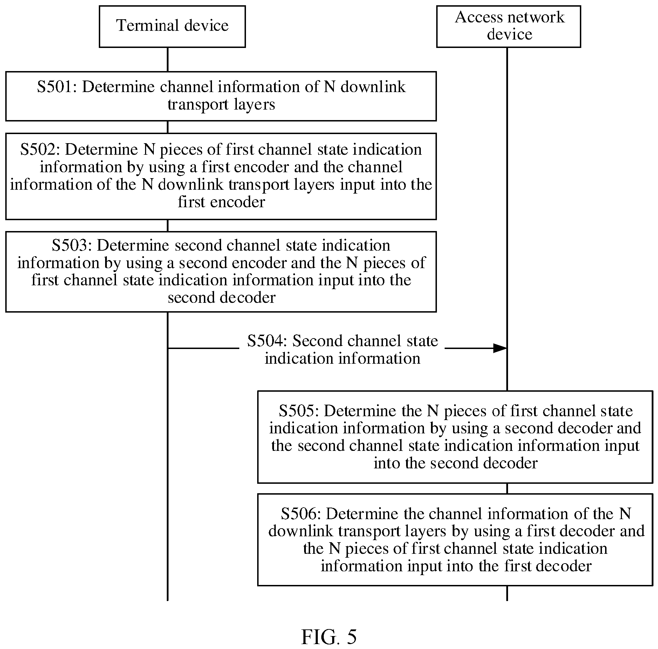

FIG. 5 shows a communication method. The method mainly includes the following procedure.

S501: A terminal device determines channel information of N downlink transport layers.

Specifically, the terminal device may estimate downlink channel information by measuring a downlink reference signal from an access network device, and determine a quantity N of downlink transport layers recommended by the terminal device. The downlink channel information may include channel state information CSI of a downlink channel. The downlink channel information may also be referred to as a downlink channel response. Then, the terminal device may divide the downlink channel information into the channel information (or referred to as channel characteristics) of the N downlink transport layers. N is a positive integer.

S502: The terminal device determines N pieces of first channel state indication information by using a first encoder and the channel information of the N downlink transport layers input into the first encoder.

Channel information of an $i^{th}$ downlink transport layer in the N downlink transport layers corresponds to an $i^{th}$ piece of first channel state indication information in the N pieces of first channel state indication information. The $i^{th}$ piece of first channel state indication information may be understood as a sequence, a matrix, or a high-dimensional tensor, and indicates the channel information of the $i^{th}$ downlink transport layer. In a possible design, the first encoder has a compression function and a quantization function, and the sequence corresponding to the $i^{th}$ piece of first channel state indication information may be specifically a bit sequence. In another possible design, the first encoder has a compression function but not a quantization function, and the sequence corresponding to the $i^{th}$ piece of first channel state indication information may be specifically a floating-point number sequence.

Specifically, the first encoder may be obtained through training in the foregoing training process. A structure of the first encoder may be understood with reference to any one of the following Manner 11, Manner 12, or Manner 13.

Manner 11: The first encoder includes one first AI model. The terminal device may process the channel information of the N downlink transport layers by using the one first AI model, to obtain the N pieces of first channel state indication information.

It may be understood that the channel information of the N downlink transport layers is input into the one first AI model, and correspondingly, an output of the first encoder includes the N pieces of first channel state indication information. Optionally, the terminal device may input the channel information of the N downlink transport layers in parallel or serial into the one first AI model. This is not limited in this disclosure.

Optionally, different first encoders, that is, different first AI models, may be set for different quantities of downlink transport layers. In other words, the one first AI model included in the first encoder is associated with a value of N, and different values of N are associated with different first AI models. For example, when N is 2, the first encoder is denoted as an encoder 21 or an encoder in an AE model 21; or when N is 3, the first encoder is denoted as an encoder 31 or an encoder in an AE model 31. Such a design can enhance AI model application flexibility. Alternatively, it is optionally set that a same first encoder or an encoder in a same AE model is correspondingly used for different quantities of downlink transport layers. Such a design can reduce AI model storage overheads.

In addition, optionally, during specific implementation, one first AI model may be trained to use, as input data, the downlink channel information estimated by measuring the downlink reference signal and output the N pieces of first channel state indication information. In this case, when measuring the downlink reference signal to estimate the downlink channel information, the terminal device may directly process the downlink channel information by using the one first AI model, to obtain the N pieces of first channel state indication information.

Manner 12: The first encoder may include N first AI models, and an $i^{th}$ first AI model in the first encoder is used to process channel information of an $i^{th}$ downlink transport layer in the N downlink transport layers, to obtain an $i^{th}$ piece of first channel state indication information in the N pieces of first channel state indication information. It may be understood that the channel information of the N downlink transport layers is respectively input into the N first AI models, an input of the $i^{th}$ first AI model in the N first AI models includes the channel information of the $i^{th}$ downlink transport layer in the N downlink transport layers, and an output of the $i^{th}$ first AI model includes the $i^{th}$ piece of first channel state indication information corresponding to the $i^{th}$ downlink transport layer. Optionally, the N first AI models in the first encoder may be the same. Alternatively, model types (for example, used neural networks) of the N first AI models are the same, while model parameters are different. Alternatively, both model types and model parameters of the N first AI models are different. This is not limited in this disclosure.

Manner 13: The first encoder includes M first AI models, and M is an integer greater than 1 and less than N. One first AI model may be used to process channel information of some (one or more) of the N downlink transport layers. Alternatively, it may be described that channel information of some of the N downlink transport layers may be processed by a same first AI model. Channel information of some downlink transport layers in the channel information of the N downlink transport layers is input in serial or parallel into one first AI model in the M first AI models.

In a possible design, the structure of the first encoder may be preconfigured in one of Manner 11, Manner 12, or Manner 13. For example, the structure is preconfigured through definition by using a protocol or in another definition manner. For another example, the structure may be preconfigured through negotiation between the terminal device and the access network device. In another possible design, the terminal device may determine the structure of the first encoder in one of Manner 11, Manner 12, or Manner 13. Further, optionally, the terminal device may send first indication information to the access network device, where the first indication information indicates the structure of the first encoder. For example, the first indication information specifically indicates that the structure of the first encoder is as in Manner 11, Manner 12, or Manner 13. Optionally, in one of Manner 11, Manner 12, or Manner 13, a mapping relationship between different values of N and the structure of the first encoder may be further preconfigured, or it may be described that the structure of the first encoder corresponds to the value of N.

Certainly, similarly, a model type and a model parameter of each first AI model in the first encoder may be further preconfigured. Alternatively, the terminal device may report, to the access network device, an identifier, a model type, a model parameter, or the like of the first AI model in the first encoder used by the terminal device. For example, when the first indication information indicates Manner 11, an identifier, a model type, a model parameter, or the like of the first AI model in the first encoder in Manner 11 may be specifically indicated.

Further, if the quantity N of downlink transport layers is equal to 1, and the first encoder has the compression function and the quantization function, the terminal device may send the N pieces of first channel state indication information to the access network device. Alternatively, if the quantity N of downlink transport layers is equal to 1, and the first encoder has only the compression function, the terminal device may perform quantization processing on the N pieces of first channel state indication information, and send then the N pieces of first channel state indication information to the access network device. Alternatively, if the quantity N of downlink transport layers is greater than 1, the terminal device further performs the following S503 and S504 after performing S502.

S503: The terminal device determines second channel state indication information by using a second encoder and the N pieces of first channel state indication information input into the second encoder, where the second channel state indication information corresponds to the N downlink transport layers.

Specifically, the terminal device may process the N pieces of first channel state indication information by using the second encoder, to obtain the second channel state indication information. An input of the second encoder includes the N pieces of first channel state indication information, and an output of the second encoder includes the second channel state indication information. It may be understood that the second channel state indication information obtained in S503 is a compression of the N pieces of first channel state indication information obtained in S502.

Specifically, the second channel state indication information may also be understood as a sequence, and a sequence length corresponding to the second channel state indication information is less than a sum of sequence lengths corresponding to the N pieces of first channel state indication information. The second encoder in Solution 1 has a compression function and a quantization function, and processing on the N pieces of first channel state indication information includes compression and quantization. The sequence corresponding to the second channel state indication information may be specifically a bit sequence.

Specifically, the second encoder may be obtained through training in the foregoing training process. For a structure of the second encoder, refer to any one of the following Manner 21, Manner 22, or Manner 23.

Manner 21: The second encoder includes one second AI model. The terminal device may process (for example, compress and quantize) the N pieces of first channel state indication information by using the one second AI model, to obtain the second channel state indication information. It may be understood that an input of the one second AI model includes the N pieces of first channel state indication information, and an output of the one second AI model includes the second channel state indication information.

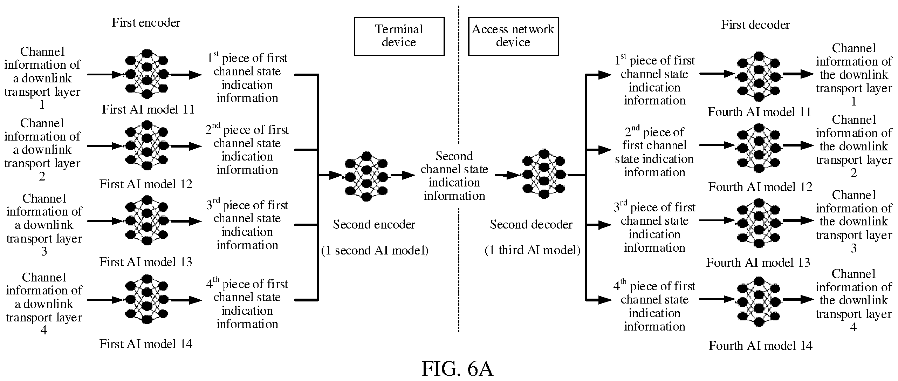

For example, FIG. 6A is a schematic flowchart of encoding. A process in which the terminal device performs compression and quantization twice on channel information of four downlink transport layers by using the first encoder and the second encoder, to obtain the second channel state indication information is illustrated by using an example in which N is 4, the first encoder in S502 includes four first AI models, that is, a first AI model 11, a first AI model 12, a first AI model 13, and a first AI model 14, and the second encoder includes one second AI model.

In addition, optionally, different second encoders, that is, different second AI models, may be set for different quantities of downlink transport layers. In other words, the one second AI model included in the second encoder is associated with the value of N, and different values of N are associated with different second AI models. For example, when N is 2, the second encoder is denoted as an encoder 22 or an encoder in an AE model 22; or when N is 3, the second encoder is denoted as an encoder 32 or an encoder in an AE model 32. Such a design can enhance the AI model application flexibility. Alternatively, it is optionally set that a same second encoder or an encoder in a same AE model is correspondingly used for different quantities of downlink transport layers. Such a design can reduce the AI model storage overheads.

Manner 22: When the quantity N of downlink transport layers is greater than 2, the second encoder may include a plurality of second AI models, and a quantity of second AI models in the second encoder is related to the quantity N of downlink transport layers. For example, the second encoder includes N-1 second AI models. An input of a $1^{st}$ second AI model in the N-1 second AI models includes a $1^{st}$ piece of first channel state indication information and a $2^{nd}$ piece of first channel state indication information in the N pieces of first channel state indication information, and an output of the $1^{st}$ second AI model includes a $1^{st}$ piece of fourth channel state indication information. From a $2^{nd}$ second AI model in the N-1 second AI models, an input of an $i^{th}$ encoder includes an $(i-1)^{th}$ piece of fourth channel state indication information output by an $(i-1)^{th}$ encoder and an $(i+1)^{th}$ piece of first channel state indication information in the N pieces of first channel state indication information, and an output of the $i^{th}$ encoder includes an $i^{th}$ piece of fourth channel state indication information, where $2 \le i \le N-1$, and i is a positive integer, that is, i is a positive integer from 2 to N-1. By analogy, an $(N-1)^{th}$ piece of fourth channel state indication information output by an $(N-1)^{th}$ second AI model is the second channel state indication information.

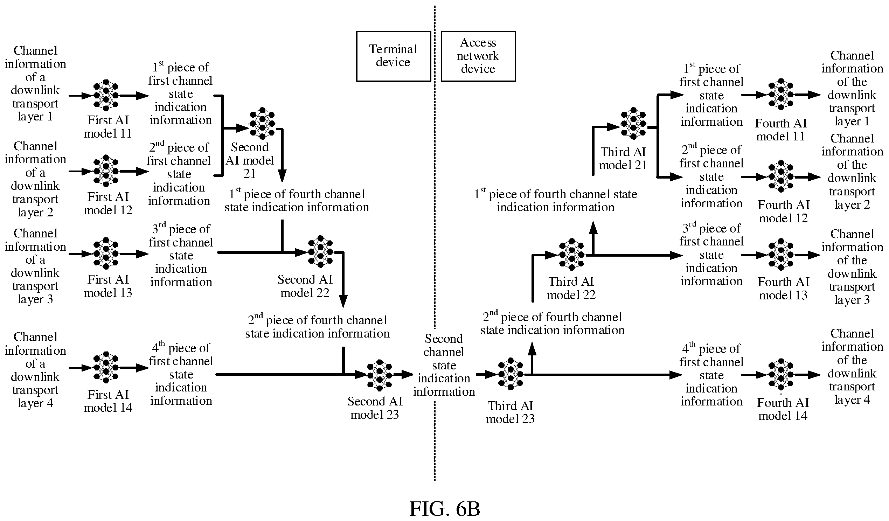

For example, FIG. 6B is a schematic flowchart of encoding. A process in which the terminal device performs compression and quantization twice on channel information of four downlink transport layers by using the first encoder and the second encoder, to obtain the second channel state indication information is illustrated by using an example in which N is 4, the first encoder in S502 includes four first AI models, that is, a first AI model 11, a first AI model 12, a first AI model 13, and a first AI model 14, and the second encoder in S503 includes three second AI models, that is, a second AI model 21, a second AI model 22, and a second AI model 23. An input of the first AI model 11 includes channel information of a downlink transport layer 1, and an output of the first AI model 11 includes a $1^{st}$ piece of first channel state indication information. An input of the first AI model 12 includes channel information of a downlink transport layer 2, and an output of the first AI model 12 includes a $2^{nd}$ piece of first channel state indication information. An input of the first AI model 13 includes channel information of a downlink transport layer 3, and an output of the first AI model 13 includes a $3^{rd}$ piece of first channel state indication information. An input of the first AI model 14 includes channel information of a downlink transport layer 4, and an output of the first AI model 14 includes a $4^{th}$ piece of first channel state indication information. An input of the second AI model 21 includes the $1^{st}$ piece of first channel state indication information and the $2^{nd}$ piece of first channel state indication information, and an output of the second AI model 21 includes a $1^{st}$ piece of fourth channel state indication information. An input of the second AI model 22 includes the $1^{st}$ piece of fourth channel state indication information and a $3^{rd}$ piece of first channel state indication information, and an output of the second AI model 22 includes a $2^{nd}$ piece of fourth channel state indication information. An input of the second AI model 23 includes the 2nd piece of fourth channel state indication information and a 4th piece of first channel state indication information, and an output of the second AI model 23 includes a 3rd piece of fourth channel state indication information. The 3rd piece of fourth channel state indication information output by the second AI model 23 is the second channel state indication information.

Manner 23: When the quantity N of downlink transport layers is greater than 2, the second encoder may include K second AI models. K is a positive integer greater than 1 and less than N-1. For example, K is 2. It may be understood that some first channel state indication information in the N pieces of first channel state indication information is input in parallel into one second artificial intelligence AI model in the K second artificial intelligence AI models. The following describes in detail inputs and outputs of the K second AI models.

For example, when N is 4, K may be 2, that is, the second encoder may include two second AI models, denoted as a second AI model 21 and a second AI model 22.

In an optional implementation, an input of the second AI model 21 includes first N-1 pieces of first channel state indication information in four pieces of first channel state indication information, and an output of the second AI model 21 includes a 1st piece of fourth channel state indication information. An input of the second AI model 22 includes an Nth piece of first channel state indication information in the N pieces of first channel state indication information and the 1st piece of fourth channel state indication information, and an output of the second AI model 22 includes a 2nd piece of fourth channel state indication information. The 2nd piece of fourth channel state indication information output by the second AI model 22 is the second channel state indication information.

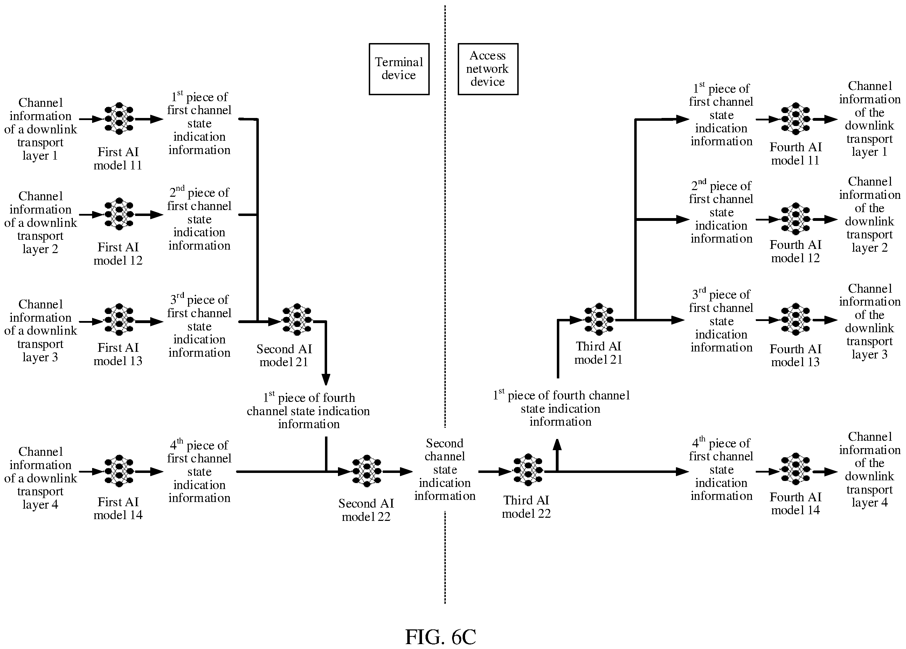

FIG. 6C is a schematic flowchart of encoding. A process in which the terminal device performs compression and quantization twice on channel information of four downlink transport layers by using the first encoder and the second encoder, to obtain the second channel state indication information is illustrated by using an example in which N is 4, the first encoder in S502 includes four first AI models, that is, a first AI model 11, a first AI model 12, a first AI model 13, and a first AI model 14, and the second encoder in S503 includes two second AI models, that is, the second AI model 21 and the second AI model 22. An input of the first AI model 11 includes channel information of a downlink transport layer 1, and an output of the first AI model 11 includes a 1st piece of first channel state indication information. An input of the first AI model 12 includes channel information of a downlink transport layer 2, and an output of the first AI model 12 includes a 2nd piece of first channel state indication information. An input of the first AI model 13 includes channel information of a downlink transport layer 3, and an output of the first AI model 13 includes a 3rd piece of first channel state indication information. An input of the first AI model 14 includes channel information of a downlink transport layer 4, and an output of the first AI model 14 includes a 4th piece of first channel state indication information. The input of the second AI model 21 includes the 1st piece of first channel state indication information, the 2nd piece of first channel state indication information, and the 3rd piece of first channel state indication information, and the output of the second AI model 21 includes the 1st piece of fourth channel state indication information. The input of the second AI model 22 includes the 1st piece of fourth channel state indication information and the 4th piece of first channel state indication information, and the output of the second AI model 22 includes the 2nd piece of fourth channel state indication information. The 2nd piece of fourth channel state indication information output by the second AI model 22 is the second channel state indication information.

In another optional implementation, an input of the second AI model 21 includes first two pieces of first channel state indication information in the N pieces of first channel state indication information, that is, a 1st piece of first channel state indication information and a 2nd piece of first channel state indication information, and an output of the second AI model 21 includes a 1st piece of fourth channel state indication information. An input of the second AI model 22 includes the 1st piece of fourth channel state indication information and remaining first channel state indication information in the N pieces of first channel state indication information other than the first two pieces of first channel state indication information. For example, N is 4, and the remaining first channel state indication information includes a 3rd piece of first channel state indication information and a 4th piece of first channel state indication information. An output of the second AI model 22 includes a 2nd piece of fourth channel state indication information. The 2nd piece of fourth channel state indication information output by the second AI model 22 is the second channel state indication information.

For example, when N is 5, K may be 2 or 3, that is, the second encoder may include two second AI models or three second AI models. The case in which the second encoder includes two second AI models may be understood with reference to the example in which N is 4. The case in which the second encoder includes three second AI models may be understood according to the following content.

The three second AI models are denoted as a second AI model 21, a second AI model 22, and a second AI model 23.

In an optional implementation, an input of the second AI model 21 includes a 1st to 3rd pieces of first channel state indication information in five pieces of first channel state indication information, and an output of the second AI model 21 includes a 1st piece of fourth channel state indication information. An input of the second AI model 22 includes a 4th piece of first channel state indication information in the five pieces of first channel state indication information and the 1st piece of fourth channel state indication information, and an output of the second AI model 22 includes a 2nd piece of fourth channel state indication information. An input of the second AI model 23 includes a 5th piece of first channel state indication information in the five pieces of first channel state indication information and the 2nd piece of fourth channel state indication information, and an output of the second AI model 23 includes a 3rd piece of fourth channel state indication information. The 3rd piece of fourth channel state indication information output by the second AI model 23 is the second channel state indication information.

In another optional implementation, an input of the second AI model 21 includes a 1st piece of first channel state indication information and a 2nd piece of first channel state indication information in five pieces of first channel state indication information, and an output of the second AI model 21 includes a 1st piece of fourth channel state indication information. An input of the second AI model 22 includes a 3rd piece of first channel state indication information and a 4th piece of first channel state indication information in the five pieces of first channel state indication information, and an output of the second AI model 22 includes a 2nd piece of fourth channel state indication information. An input of the second AI model 23 includes a 5th piece of first channel state indication information in the five pieces of first channel state indication information, the 1st piece of fourth channel state indication information, and the 2nd piece of fourth channel state indication information, and an output of the second AI model 23 includes a 3rd piece of fourth channel state indication information. The 3rd piece of fourth channel state indication information output by the second AI model 23 is the second channel state indication information.

In addition, there is another optional implementation. An input of the second AI model 21 includes a 1st piece of first channel state indication information and a 2nd piece of first channel state indication information in five pieces of first channel state indication information, and an output of the second AI model 21 includes a 1st piece of fourth channel state indication information. An input of the second AI model 22 includes a 3rd piece of first channel state indication information to a 5th piece of first channel state indication information in the five pieces of first channel state indication information, and an output of the second AI model 22 includes a 2nd piece of fourth channel state indication information. An input of the second AI model 23 includes the 1st piece of fourth channel state indication information and the 2nd piece of fourth channel state indication information, and an output of the second AI model 22 includes a 3rd piece of fourth channel state indication information. The 3rd piece of fourth channel state indication information output by the second AI model 23 is the second channel state indication information.

During specific implementation, in a possible design, the structure of the second encoder may be preconfigured in one of Manner 21, Manner 22, or Manner 23. For example, the structure is preconfigured through definition by using a protocol or in another definition manner. For another example, the structure may be preconfigured through negotiation between the terminal device and the access network device. In another possible design, the terminal device may determine the structure of the second encoder in one of Manner 21, Manner 22, or Manner 23. Further, optionally, the terminal device may send second indication information to the access network device, where the second indication information indicates the structure of the second encoder. For example, the second indication information specifically indicates that the structure of the second encoder is as in Manner 21, Manner 22, or Manner 23. Optionally, in one of Manner 21, Manner 22, or Manner 23, a mapping relationship between different values of N and the structure of the second encoder may be further preconfigured, or it may be described that the structure of the second encoder corresponds to the value of N.

Certainly, similarly, one or more of a model type and a model parameter of each second AI model in the second encoder may be further preconfigured. Alternatively, the terminal device may report, to the access network device, one or more of an identifier, a model type, a model parameter, or the like of the second AI model in the second encoder used by the terminal device. For example, when the second indication information indicates Manner 21, one or more of an identifier, a model type, a model parameter, or the like of the second AI model in the second encoder in Manner 21 may be specifically indicated.

S504: The terminal device sends the second channel state indication information to the access network device.

In an optional implementation, it may be predefined that the terminal device feeds back, to the access network device, CSI obtained by performing compression twice, or the terminal device and the access network device may negotiate in advance to feed back CSI obtained by performing compression twice. In this case, when receiving the second channel state indication information, the access network device may determine that decompression needs to be performed twice on the second channel state indication information, and further perform S505 and S506.

In another optional implementation, when sending the second channel state indication information, the terminal device may further send information indicating a rank, for example, an RI, where the value of the quantity N of downlink transport layers is equal to a value of the rank. Alternatively, it may be understood that the RI indicates the value of N. When the terminal device sends the second channel state indication information, the RI indicates that the value of N is greater than 1, and the access network device may also learn, based on the RI, that the second channel state indication information is obtained by the terminal device by performing compression twice. In such a design, existing information is used to additionally define or indicate other content, so that information utilization can be improved.

The structure of the second encoder corresponds to the value of N. Similarly, a structure of a second decoder matching the second encoder also corresponds to the value of N. Optionally, if the second encoder and the second decoder are two parts of a same auto-encoder, a structure of a second auto-encoder to which the second encoder belongs may correspond to the value of N. Further, the access network device may determine one or more of the structure of the second encoder, the structure of the second decoder, or the structure of the second auto-encoder based on the value of N. Optionally, the structure of the first encoder may also correspond to the value of N. Similarly, a structure of a first decoder matching the first encoder also corresponds to the value of N. Optionally, if the first encoder and the first decoder are two parts of a same auto-encoder, a structure of a first auto-encoder to which the first encoder belongs may also correspond to the value of N. Further, the access network device may determine one or more of the structure of the first encoder, the structure of the first decoder, or the structure of the first auto-encoder based on the value of N.

In addition, optionally, an independent piece of information may be defined, for example, denoted as second information. The second information indicates one or more of the following: the second encoder, the auto-encoder AE to which the second encoder belongs, and the second decoder matching the second encoder. When sending the second channel state indication information, the terminal device may further send the second information. In this case, the access network device may determine, based on the second information, the second decoder matching the second encoder. For example, when the second information indicates the second encoder, the second information may include one or more of a model identifier, a model type, and a model parameter of the second encoder. For another example, the second information may include the second indication information described in S503, the second indication information indicates that the structure of the second encoder is as in one of Manner 21, Manner 22, and Manner 23, and a model type and a model parameter of the second AI model included in the second encoder described in each manner are preconfigured. In this case, the access network device may determine the structure of the second encoder based on the second indication information. Optionally, the second information may further include information indicating the value of N.

Similarly, first information may also be separately defined, and the first information indicates one or more of the following: the first encoder, the first auto-encoder AE to which the first encoder belongs, and the first decoder matching the first encoder. In this case, the access network device may determine, based on the first information, a decoder matching the first encoder. For example, when the first information indicates the first encoder, the first information may include one or more of a model identifier, a model type, and a model parameter of the first encoder. For another example, the first information may include the first indication information described in S502, the first indication information indicates that the structure of the first encoder is as in one of Manner 11, Manner 12, and Manner 13, and a model structure and a model parameter of the first AI model included in the first encoder described in each manner are preconfigured. In this case, the access network device may determine the structure of the first encoder based on the first indication information. Optionally, the first information may further include information indicating the value of N.

S505: The access network device determines the N pieces of first channel state indication information by using the second decoder and the second channel state indication information input into the second decoder.

The second decoder is a decoder used together with the second encoder described in S503, and implementation of the second decoder may be understood as an inverse process of the second encoder. Specifically, the access network device may determine the second decoder based on information sent by the terminal device or a related configuration of the second encoder, and then the access network device inputs the received second channel state indication information into the second decoder, to obtain the N pieces of first channel state indication information. It may be understood that in an example, in Solution 1, the second decoder has a dequantization function and a decompression function, and processing performed by the access network device on the second channel state indication information by using the second decoder includes dequantization and decompression.

Specifically, the second decoder may be obtained through training in the foregoing training process. Corresponding to the three structures of the second encoder described in S503, the second decoder may also have three corresponding structures. For ease of implementation, the following shows three possible structures of the second decoder by using Manner 31 to Manner 33. Manner 31 matches the second encoder described in Manner 21, Manner 32 matches the second encoder described in Manner 22, and Manner 33 matches the second encoder described in Manner 23.

Manner 31: The second decoder includes one third AI model. An input of the third decoder includes the second channel state indication information obtained by the access network device, and an output of the one third decoder includes the N pieces of first channel state indication information.

For example, FIG. 6A further shows a process in which the access network device performs dequantization and decompression on the second channel state indication information by using the second decoder including the one third AI model, to obtain the N pieces of first channel state indication information.

Manner 32: The second decoder may include a plurality of third AI models, and a quantity of third AI models in the second decoder is related to the quantity N of downlink transport layers. Corresponding to the descriptions in S503, when N is greater than 2, the second decoder may include N-1 third AI models. An input of an $(N-1)^{th}$ third AI model in the N-1 third artificial intelligence AI models includes the second channel state indication information, and an output of the $(N-1)^{th}$ third AI model includes an $(N-2)^{th}$ piece of fourth channel state indication information and the $N^{th}$ piece of first channel state indication information. An input of an $(N-i)^{th}$ third artificial intelligence AI model includes an $(N-i)^{th}$ piece of fourth channel state indication information, and an output of the $(N-i)^{th}$ third artificial intelligence AI model includes an $(N-i+1)^{th}$ piece of first channel state indication information in the N pieces of first channel state indication information and an $(N-i-1)^{th}$ piece of fourth channel state indication information. An input of a $1^{st}$ third AI model includes the $1^{st}$ piece of fourth channel state indication information, and an output of the $1^{st}$ third AI model includes the $1^{st}$ piece of first channel state indication information and the $2^{nd}$ piece of first channel state indication information in the N pieces of first channel state indication information, where i is a positive integer from 2 to N-2. It may be understood that neither N-i nor N-i-1 may be 0. The second channel state indication information is the $(N-1)^{th}$ piece of fourth channel state indication information.

Specifically, if N is 3, i is 1 to 2. The second decoder includes a $2^{nd}$ third AI model and a $1^{st}$ third AI model. An input of the $2^{nd}$ third AI model includes a $2^{nd}$ piece of fourth channel state indication information, that is, the second channel state indication information, and an output of the $2^{nd}$ third AI model includes a $3^{rd}$ piece of first channel state indication information and a $1^{st}$ piece of fourth channel state indication information. An input of the $1^{st}$ third model includes the $1^{st}$ piece of fourth channel state indication information, and an output of the $1^{st}$ third AI model includes a $1^{st}$ piece of first channel state indication information and a $2^{nd}$ piece of first channel state indication information.

Alternatively, if N is greater than 3, the input of the $(N-1)^{th}$ third AI model in the N-1 third AI models includes the second channel state indication information obtained by the access network device, and the output of the $(N-1)^{th}$ third AI model includes the $(N-2)^{th}$ piece of fourth channel state indication information and the $N^{th}$ piece of first channel state indication information. From an $(N-2)^{th}$ third AI model to a $2^{nd}$ third AI model, i indicates a positive integer from 2 to N-2. The input of the $(N-i)^{th}$ third AI model includes the $(N-i)^{th}$ piece of fourth channel state indication information, and the output of the $(N-i)^{th}$ third AI model includes the $(N-i-1)^{th}$ piece of fourth channel state indication information and the $(N-i+1)^{th}$ piece of first channel state indication information in the N pieces of first channel state indication information. The input of the $1^{st}$ third AI model includes the $1^{st}$ piece of fourth channel state indication information, and the output of the $(N-1)^{th}$ second AI model includes the $1^{st}$ piece of first channel state indication information and the $2^{nd}$ piece of first channel state indication information.

For example, FIG. 6B further shows a process in which the access network device performs dequantization and decompression on the second channel state indication information by using the second decoder, to obtain four pieces of first channel state indication information. The second decoder includes three third AI models, and a $3^{rd}$ third AI model to a $1^{st}$ AI model are sequentially denoted as a third AI model 23, a third AI model 22, and a third AI model 21. It may be understood that the third AI model 23 matches the second AI model 23, the third AI model 22 matches the second AI model 22, and the third AI model 21 matches the second AI model 21. Specifically, an input of the third AI model 23 includes the second channel state indication information, and an output of the third AI model 23 includes a $2^{nd}$ piece of fourth channel state indication information and the $4^{th}$ piece of first channel state indication information. An input of the third AI model 22 includes the $2^{nd}$ piece of fourth channel state indication information, and an output of the third AI model 22 includes the $1^{st}$ piece of fourth channel state indication information and the $3^{rd}$ piece of first channel state indication information. An input of the third AI model 21 includes the $1^{st}$ piece of fourth channel state indication information, and an output of the third AI model 21 includes the $1^{st}$ piece of first channel state indication information and the $2^{nd}$ piece of first channel state indication information.

Manner 33: When the quantity N of downlink transport layers is greater than 2, the second decoder may include K third AI models. K is a positive integer greater than 1 and less than N-1. For example, K is 2. It may be understood that each of the K third AI models is used to restore some first channel state indication information in the N pieces of first channel state indication information. The following describes in detail inputs and outputs of the K third AI models.

For example, when N is 4, K may be 2, that is, the second decoder may include two third AI models, denoted as a third AI model 21 and a third AI model 22.

In an optional implementation, an input of the third AI model 22 includes the second channel state indication information, and an output of the third AI model 22 includes the $1^{st}$ piece of fourth channel state indication information and the $N^{th}$ piece of first channel state indication information. An input of the third AI model 21 includes the $1^{st}$ piece of fourth channel state indication information, and an output of the third AI model 21 includes the first N-1 pieces of first channel state indication information in the N pieces of first channel state indication information.

FIG. 6C further shows a process in which the access network device dequantizes and decompresses the second channel state indication information by using the second decoder, to obtain four pieces of first channel state indication information. The second decoder includes two third AI models, and a $2^{nd}$ third AI model and a $1^{st}$ AI model are sequentially denoted as the third AI model 22 and the third AI model 21. It may be understood that the third AI model 22 matches the second AI model 22, and the third AI model 21 matches the second AI model 21. Specifically, the input of the third AI model 22 includes the second channel state indication information, and the output of the third AI model 22 includes the $1^{st}$ piece of fourth channel state indication information and the $4^{th}$ piece of first channel state indication information. The input of the third AI model 21 includes the $1^{st}$ piece of fourth channel state indication information, and the output of the third AI model 21 includes the $1^{st}$ piece of first channel state indication information, the $2^{nd}$ piece of first channel state indication information, and the $3^{rd}$ piece of first channel state indication information.

In another optional implementation, an input of the third AI model 22 includes the second channel state indication information, and an output of the third AI model 22 includes the $1^{st}$ piece of fourth channel state indication information and remaining first channel state indication information in the N pieces of first channel state indication information other than first two pieces of first channel state indication information. For example, N is 4, and the remaining first channel state indication information includes the 3rd piece of first channel state indication information and the 4th piece of first channel state indication information. An input of the third AI model 21 includes the 1st piece of fourth channel state indication information, and an output of the third AI model 21 includes the first two pieces of first channel indication information in the N pieces of first channel state indication information, that is, the 1st piece of first channel state indication information and the 2nd piece of first channel state indication information.

For example, when N is 5, K may be 2 or 3, that is, the second decoder may include two third AI models or three third AI models. The case in which the second decoder includes two third AI models may be understood with reference to the example in which N is 4. The case in which the second decoder includes three third AI models may be understood according to the following content.

The three third AI models are denoted as a third AI model 23, the third AI model 22, and the third AI model 21. Corresponding to the example described in Manner 23, in an optional implementation, an input of the third AI model 23 includes the second channel state indication information, and an output of the third AI model 23 includes the 5th piece of first channel state indication information in the five pieces of first channel state indication information and the 2nd piece of fourth channel state indication information. The input of the third AI model 22 includes the 2nd piece of fourth channel state indication information, and the output of the third AI model 22 includes the 4th piece of first channel state indication information in the five pieces of first channel state indication information and the 1st piece of fourth channel state indication information. The input of the third AI model 21 includes the 1st piece of fourth channel state indication information, and the output of the third AI model 21 includes the 1st to the 3rd pieces of first channel state indication information in the five pieces of first channel state indication information.

In another optional implementation, the input of the third AI model 23 includes the second channel state indication information, and the output of the third AI model 23 includes a 5th piece of first channel state indication information in five pieces of first channel state indication information, the 2nd piece of fourth channel state indication information, and the 1st piece of fourth channel state indication information. The input of the third AI model 22 includes the 2nd piece of fourth channel state indication information, and the output of the third AI model 22 includes the 3rd piece of first channel state indication information and the 4th piece of first channel state indication information in the five pieces of first channel state indication information. The input of the third AI model 21 includes the 1st piece of fourth channel state indication information, and the output of the third AI model 21 includes the 1st piece of first channel state indication information and the 2nd piece of first channel state indication information in the five pieces of first channel state indication information.

In addition, there is another optional implementation. An input of the third AI model 23 includes the second channel state indication information, and an output of the third AI model 23 includes the 1st piece of fourth channel state indication information and the 2nd piece of fourth channel state indication information. The input of the third AI model 22 includes the 2nd piece of fourth channel state indication information, and the output of the third AI model 22 includes the 3rd piece of first channel state indication information to the 5th piece of first channel state indication information in the five pieces of first channel state indication information. The input of the third AI model 21 includes the 1st piece of fourth channel state indication information, and the output of the third AI model 21 includes the 1st piece of first channel state indication information and the 2nd piece of first channel state indication information in the five pieces of first channel state indication information.

In an optional implementation, if the structure of the second encoder is preconfigured in one of Manner 21, Manner 22, or Manner 23, the second decoder is also correspondingly preconfigured as a corresponding structure. For example, if the structure of the second encoder is preconfigured in Manner 21, the structure of the second decoder is also preconfigured in Manner 31; if the structure of the second encoder is preconfigured in Manner 22, the structure of the second decoder is also preconfigured in Manner 32; or if the structure of the second encoder is preconfigured in Manner 23, the structure of the second decoder is also preconfigured in Manner 33. Further, optionally, in this design, the second decoder corresponds to the quantity of downlink transport layers. If the quantity of downlink transport layers is predefined, the terminal device does not need to indicate the value of N, and the access network device may learn of the value of N, so that the access network device may obtain the second decoder with reference to a preconfiguration manner and the quantity N of downlink transport layers. Alternatively, corresponding to the descriptions in S504, if the terminal device sends, to the access network device, the information indicating the rank, the access network device may determine the quantity N of downlink transport layers based on the value of the rank, so that the access network device may obtain the second decoder with reference to a preconfiguration manner and the quantity N of downlink transport layers.

For example, when the structure of the second encoder is preconfigured in Manner 21 and the structure of the second decoder is preconfigured in Manner 31, the access network device may determine a quantity of input ports of the second encoder and a quantity of output ports of the second decoder based on the value of N. Alternatively, when the second encoder in Manner 21 includes one second AI model, different quantities of downlink transport layers correspond to different second AI models, and the model structure and the model parameter of the second AI model are preconfigured, the access network device may determine a corresponding second AI model based on the value of N. Similarly, when the second decoder in Manner 31 includes one third AI model, different quantities of downlink transport layers correspond to different third AI models, and the model type and the model parameter of the third AI model are preconfigured, the access network device may determine a corresponding third AI model based on the value of N. When the structure of the second encoder is preconfigured in Manner 22 and the structure of the second decoder is preconfigured in Manner 32, the access network device may determine, based on the value of N, a quantity of second AI models included in the second encoder and a quantity of third AI models included in the second decoder. If the model type and the model parameter of each second AI model are preconfigured, the access network device may determine the second encoder and the second decoder based on the value of N. When the structure of the second encoder is preconfigured in Manner 23 and the structure of the second decoder is preconfigured in Manner 33, if a value relationship between K and N is preset, for example, K is N-2, the access network device may determine, based on the value of N, the quantity K of second AI models included in the second encoder. If model types and model parameters of the K second AI models are preconfigured, the access network device may determine the structure of the second encoder based on a value of K, and correspondingly determine, by using the value of K, the second decoder matching the second encoder.

In another optional implementation, as described in S504, if the terminal device sends the second information to the access network device, the access network device may determine the second decoder based on the second information. For example, when the second information includes the second indication information, the access network device may determine, based on the second indication information, that the structure of the second decoder is as in Manner 31, Manner 32, or Manner 33. Similarly, if the quantity of downlink transport layers is predefined, the terminal device does not need to indicate the value of N, and the access network device may learn of the value of N, so that the access network device may obtain the second decoder with reference to a preconfiguration manner and the quantity N of downlink transport layers. Alternatively, corresponding to the descriptions in S504, if the terminal device sends, to the access network device, the information indicating the value of N, the access network device may determine the quantity N of downlink transport layers based on the information, so that the access network device may obtain the second decoder with reference to a preconfiguration manner and the quantity N of downlink transport layers.

S506: The access network device determines the channel information of the N downlink transport layers by using the first decoder and the N pieces of first channel state indication information input into the first decoder.

The first decoder is a decoder used together with the first encoder described in S502, and implementation of the first decoder may be understood as an inverse process of the first encoder. Specifically, the access network device may determine the first decoder based on the information sent by the terminal device or a related configuration of the first encoder, and then the access network device inputs the N pieces of first channel state indication information determined in S505 into the first decoder, to obtain the channel information of the N downlink transport layers. It may be understood that in an example, in Solution 1, the first decoder has a dequantization function and a decompression function, and processing performed by the access network device on the N pieces of first channel state indication information by using the first decoder includes dequantization and decompression.

Specifically, the first decoder may be obtained through training in the foregoing training process. Corresponding to the three structures of the first encoder described in S502, the first decoder also has three corresponding structures. For ease of implementation, the following shows three possible structures of the first decoder by using Manner 41 to Manner 43. Manner 41 matches the first encoder described in Manner 11, Manner 42 matches the first encoder described in Manner 12, and Manner 43 matches the first encoder described in Manner 13.

Manner 41: The first decoder includes one fourth AI model. The terminal device may process the N pieces of first channel state indication information by using the one fourth AI model, to restore the channel information of the N downlink transport layers. It may be understood that the access network device inputs the N pieces of first channel state indication information into the one fourth AI model. Correspondingly, an output of the first decoder includes the restored channel information of the N downlink transport layers. Optionally, the access network device may input the N pieces of first channel state indication information in parallel or serial into the one fourth AI model. This is not limited in this disclosure.

Optionally, different first decoders, that is, different fourth AI models, may be set for different quantities of downlink transport layers. In other words, the one fourth AI model included in the first decoder is associated with the value of N, and different values of N are associated with different fourth AI models. For example, when N is 2, the first decoder is denoted as a decoder 21 or a decoder in the AE model 21; or when N is 3, the first decoder is denoted as a decoder 31 or a decoder in the AE model 31. Such a design can enhance the AI model application flexibility. Alternatively, it is optionally set that a same first decoder or a decoder in a same AE model is correspondingly used for different quantities of downlink transport layers. This design can reduce the AI model storage overheads.

Manner 42: The first decoder may include N fourth AI models, and an $i^{th}$ fourth AI model in the first decoder is used to process the $i^{th}$ piece of first channel state indication information in the N pieces of first channel state indication information, to obtain the channel information of the $i^{th}$ downlink transport layer in the N downlink transport layers. It may be understood that the N pieces of first channel state indication information are respectively input into the N fourth AI models. An input of the $i^{th}$ fourth AI model in the N fourth AI models includes the $i^{th}$ piece of first channel state indication information in the N pieces of first channel state indication information, and an output of the $i^{th}$ fourth AI model includes the channel information of the $i^{th}$ downlink transport layer. Optionally, the N fourth AI models in the first decoder may be the same. Alternatively, model types (for example, used neural networks) of the N fourth AI models are the same, while model parameters are different. Alternatively, both model types and model parameters of the N fourth AI models are different. This is not limited in this disclosure.

Manner 43: The first decoder includes M fourth AI models, and M is an integer greater than 1 and less than N. One fourth AI model may be used to process some (one or more pieces of) first channel state indication information in the N pieces of first channel state indication information. Alternatively, it may be described that some first channel state indication information in the N pieces of first channel state indication information may be processed by a same fourth AI model. Some first channel state indication information in the N pieces of first channel state indication information is input in serial or parallel into one of the M fourth AI models.

In an example, corresponding to inclusion of the four first AI models in the first encoder in FIG. 6A, FIG. 6B, and FIG. 6C, it is further shown in FIG. 6A, FIG. 6B, and FIG. 6C that the first decoder includes four fourth AI models, that is, a fourth AI model 11 associated with the first AI model 11, a fourth AI model 12 associated with the first AI model 12, a fourth AI model 13 associated with the first AI model 13, and a fourth AI model 14 associated with the first AI model 14. An input of the fourth AI model 11 includes the $1^{st}$ piece of first channel state indication information, and an output of the fourth AI model 11 includes the channel information of the downlink transport layer 1. An input of the fourth AI model 12 includes the $2^{nd}$ piece of first channel state indication information, and an output of the fourth AI model 12 includes the channel information of the downlink transport layer 2. An input of the fourth AI model 13 includes the $3^{rd}$ piece of first channel state indication information, and an output of the fourth AI model 13 includes the channel information of the downlink transport layer 3. An input of the fourth AI model 14 includes the $4^{th}$ piece of first channel state indication information, and an output of the fourth AI model 14 includes the channel information of the downlink transport layer 4.

In an optional implementation, if the structure of the first encoder is preconfigured in one of Manner 11, Manner 12, or Manner 13, the first decoder is also correspondingly preconfigured as a corresponding structure. For example, if the structure of the first encoder is preconfigured in Manner 11, the structure of the first decoder is also preconfigured in Manner 41; if the structure of the first encoder is preconfigured in Manner 12, the structure of the first decoder is also preconfigured in Manner 42; or if the structure of the first encoder is preconfigured in Manner 13, the structure of the first decoder is also preconfigured in Manner 43. Further, optionally, in this design, the first decoder corresponds to the quantity of downlink transport layers. If the quantity of downlink transport layers is predefined, the terminal device does not need to indicate the value of N, and the access network device may learn of the value of N, so that the access network device may obtain the first decoder with reference to a preconfiguration manner and the quantity N of downlink transport layers. Alternatively, corresponding to the descriptions in S504, if the terminal device sends, to the access network device, the information indicating the rank, the access network device may determine the quantity N of downlink transport layers based on the value of the rank, so that the access network device may obtain the first decoder with reference to a preconfiguration manner and the quantity N of downlink transport layers.

For example, when the structure of the first encoder is preconfigured in Manner 11 and the structure of the first decoder is preconfigured in Manner 41, the access network device may determine an amount of input data of the first encoder and an amount of output data of the first decoder based on the value of N. Alternatively, when the first encoder in Manner 11 includes one first AI model, different quantities of downlink transport layers correspond to different first AI models, and the model type and the model parameter of the first AI model are preconfigured, the access network device may determine a corresponding first AI model based on the value of N. Similarly, when the first decoder in Manner 41 includes one fourth AI model, different quantities of downlink transport layers correspond to different fourth AI models, and the model type and the model parameter of the fourth AI model are preconfigured, the access network device may determine a corresponding fourth AI model based on the value of N. When the structure of the first encoder is preconfigured in Manner 12 and the structure of the first decoder is preconfigured in Manner 42, the access network device may determine, based on the value of N, a quantity of first AI models included in the first encoder. If a model type and a model parameter of each first AI model are preconfigured, the access network device may obtain the first encoder based on the value of N. The access network device may further determine, based on the value of N, a quantity of fourth AI models included in the first decoder. If a model type and a model parameter of each fourth AI model are preconfigured, the access network device may obtain the first decoder based on the value of N. When the structure of the first encoder is preconfigured in Manner 13, if a value relationship between M and N is preset, for example, M is N-2, the access network device may determine, based on the value of N, the quantity M of first AI models included in the first encoder and the quantity M of fourth AI models included in the first decoder. If model types and model parameters of the M first AI models/fourth AI models are preconfigured, the access network device may obtain the first encoder and the first decoder based on a value of M.

Further, optionally, the access network device may integrate the restored channel information of the N downlink transport layers, to restore the foregoing downlink channel information estimated based on measurement of the downlink reference signal.

In the foregoing Solution 1, compression is performed twice on the downlink channel information by using a plurality of levels of AI models, so that resources occupied by common information in CSI of a plurality of layers are reduced, and CSI feedback overheads can be reduced.

Solution 2

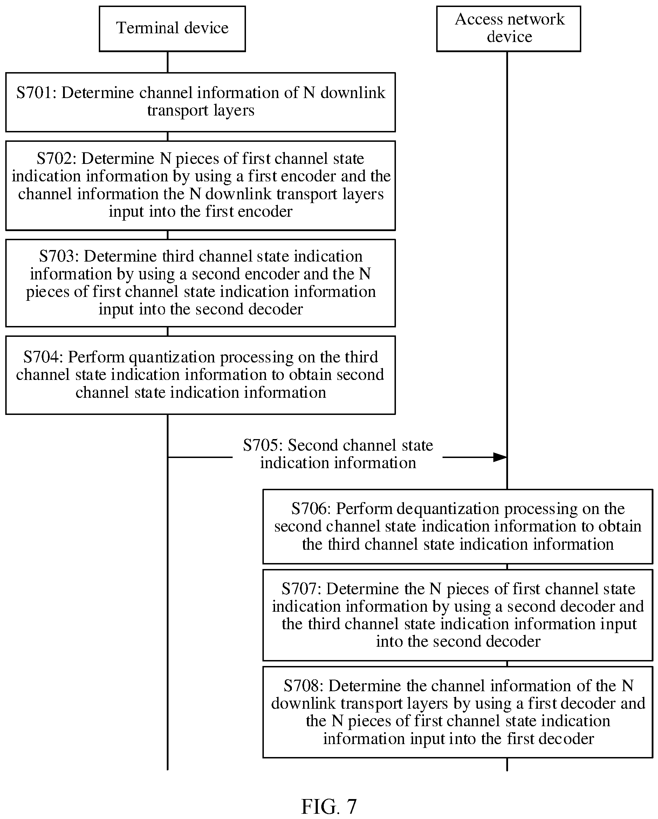

FIG. 7 shows a communication method. The method mainly includes the following procedure.

S701: A terminal device determines channel information of N downlink transport layers, where N is a positive integer.

Specifically, refer to S501 for understanding. Details are not described in this disclosure again.

S702: The terminal device determines N pieces of first channel state indication information by using a first encoder and the channel information of the N downlink transport layers input into the first encoder.

Specifically, refer to S502 for understanding. Details are not described in this disclosure again.

Further, if the quantity N of downlink transport layers is equal to 1, and the first encoder has a compression function and a quantization function, the terminal device may send the N pieces of first channel state indication information to an access network device. Alternatively, if the quantity N of downlink transport layers is equal to 1, and the first encoder has only a compression function, the terminal device may perform quantization processing on the N pieces of first channel state indication information, and send the N pieces of first channel state indication information to an access network device. Alternatively, if the quantity N of downlink transport layers is greater than 1, the terminal device further performs the following S703 and S704 after performing S702.

S703: The terminal device determines third channel state indication information by using a second encoder and the N pieces of first channel state indication information input into the second encoder, where the third channel state indication information corresponds to the N downlink transport layers.

It may be understood that in Solution 2, the second encoder has a compression (encoding) function but not a quantization function. The terminal device may perform compression processing on the N pieces of first channel state indication information by using the second encoder, to obtain the third channel state indication information. An input of the second encoder includes the N pieces of first channel state indication information, and an output of the second encoder includes the third channel state indication information. It may be understood that the third channel state indication information obtained in S703 is a compression of the N pieces of first channel state indication information obtained in S702.

Specifically, the third channel state indication information may also be understood as a sequence, and a sequence length corresponding to the third channel state indication information is less than a sum of sequence lengths corresponding to the N pieces of first channel state indication information. The second encoder in Solution 2 has the compression function but not the quantization function, and processing on the N pieces of first channel state indication information includes compression. The sequence corresponding to the third channel state indication information may be specifically a bit sequence.

Specifically, the second encoder may be obtained through training in the foregoing training process. For a structure of the second encoder, refer to any one of the following Manner 21-1, Manner 22-1, or Manner 23-1.

Manner 21-1: The second encoder includes one second AI model. The terminal device may perform compression processing on the N pieces of first channel state indication information by using the one second AI model, to obtain the third channel state indication information. It may be understood that an input of the one second AI model includes the N pieces of first channel state indication information, and an output of the one second AI model includes the third channel state indication information.

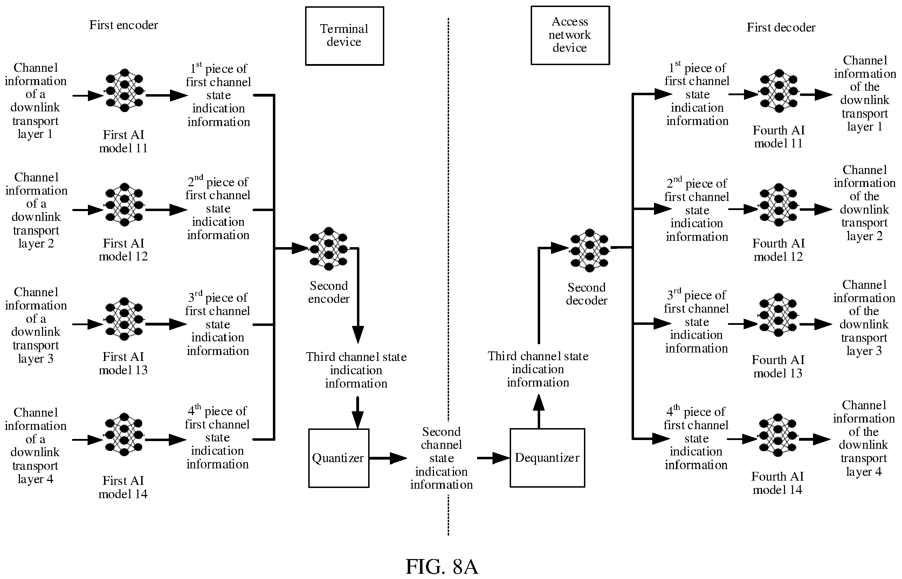

For example, FIG. 8A is a schematic flowchart of encoding. For descriptions of FIG. 8A, refer to the descriptions of FIG. 6A. A difference between FIG. 8A and FIG. 6A lies in that the second encoder does not have the quantization function, and an output of the second encoder is the third channel state indication information. The third channel state indication information is unquantized, and second channel state indication information is quantized information.

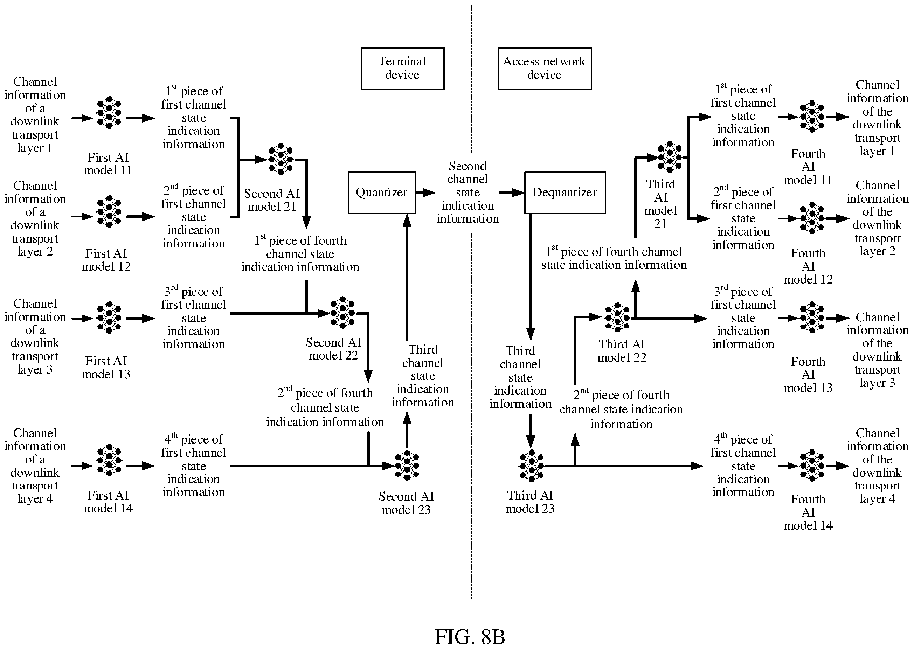

Manner 22-1: When the quantity N of downlink transport layers is greater than 2, the second encoder may include a plurality of second AI models, and a quantity of second AI models in the second encoder is related to the quantity N of downlink transport layers. For example, FIG. 8B is a schematic flowchart of encoding. For descriptions of FIG. 8B, refer to the descriptions of FIG. 6B. A difference between FIG. 8B and FIG. 6B lies in that the second encoder does not have the quantization function, and an output of the second encoder is the third channel state indication information. The third channel state indication information is unquantized, and second channel state indication information is quantized information.

Manner 23-1: When the quantity N of downlink transport layers is greater than 2, the second encoder may include K second AI models. K is a positive integer greater than 1 and less than N-1. For example, K is 2. It may be understood that some first channel state indication information in the N pieces of first channel state indication information is input in parallel into one second artificial intelligence AI model in the K second artificial intelligence AI models.

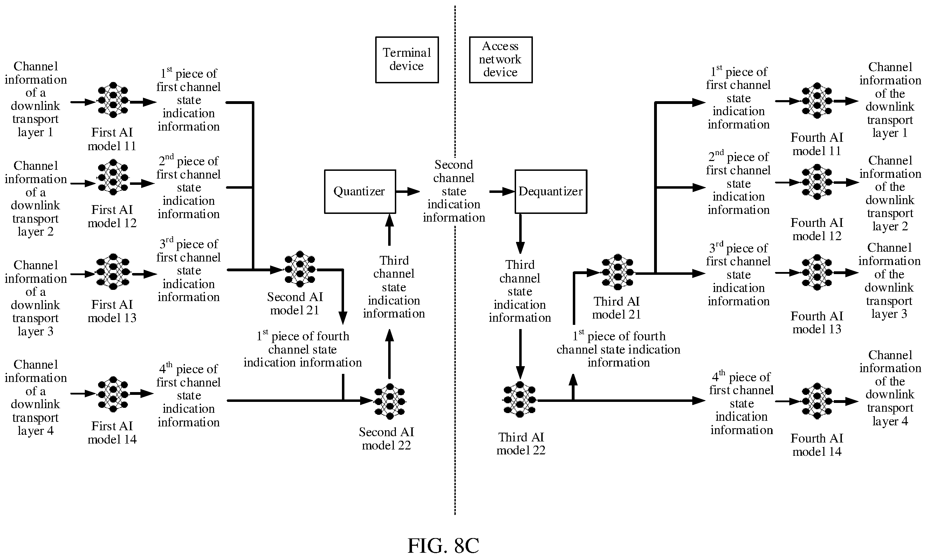

FIG. 8C is a schematic flowchart of encoding. For descriptions of FIG. 8C, refer to the descriptions of FIG. 6C. A difference between FIG. 8C and FIG. 6C lies in that the second encoder does not have the quantization function, and an output of the second encoder is the third channel state indication information. The third channel state indication information is unquantized, and second channel state indication information is quantized information.

S704: The terminal device performs quantization processing on the third channel state indication information to obtain the second channel state indication information.

Specifically, the terminal device may perform quantization processing on the third channel state indication information by using a quantizer, to obtain the second channel state indication information. The quantizer may be one of the following: a non-uniform quantizer, a scalar quantizer, a vector quantizer, a quantizer designed by experience, and a quantizer obtained through AI training. The quantizer may be trained together with an encoder (for example, the first encoder, the second encoder, or a related decoder and auto-encoder AE). The quantization processing may also be referred to as a quantization operation. The quantization processing may be understood as searching, in a quantization dictionary, for an item closest to a to-be-quantized amount, and outputting an index of the item. In this disclosure, the to-be-quantized amount is the third channel state indication information, and an index output by querying the quantization dictionary is included in quantized information of the third channel state indication information, that is, the second channel state indication information. It may be understood that the third channel state indication information is a floating-point number sequence, and the second channel state indication information obtained through quantization may be specifically a bit sequence.

For example, FIG. 8A, FIG. 8B, and FIG. 8C further show a process in which the terminal device performs quantization processing on the third channel state indication information based on the quantizer, to obtain the second channel state indication information. An input of the quantizer includes the third channel state indication information, and an output of the quantizer includes the second channel state indication information.

Optionally, between S702 and S703, the terminal device may also quantize the N pieces of first channel state indication information in S702, so that the N pieces of first channel state indication information used by the terminal device in S703 are quantized information. When N is greater than 1, the terminal device may separately perform quantization processing on the N pieces of first channel state indication information in S702 by using N quantizers. The N quantizers are in one-to-one correspondence with the N pieces of first channel state indication information. The N quantizers may be the same or different.

Optionally, in a possible design, the quantizer used by the terminal device may be preconfigured. For example, the quantizer is preconfigured through definition by using a protocol, or the terminal device and the access network device negotiate about the quantizer in advance. In another possible design, the terminal device may determine the quantizer used by the terminal device, and send, to the access network device, information indicating the quantizer used by the terminal device.

S705: The terminal device sends the second channel state indication information to the access network device.

Specifically, refer to S504 for implementation. Details are not described in this disclosure again.

S706: The access network device performs dequantization processing on the second channel state indication information to obtain the third channel state indication information.

For example, FIG. 8A, FIG. 8B, and FIG. 8C further show a process in which the access network device performs dequantization processing on the second channel state indication information by using a dequantizer, to obtain the third channel state indication information. The dequantizer is used together with the quantizer. The dequantizer may be understood as performing an inverse operation of the quantizer. An input of the dequantizer includes the second channel state indication information, and an output of the dequantizer includes the third channel state indication information. Specifically, corresponding to the case in which the quantizer is preconfigured, it may be understood that the dequantizer is also preconfigured. Alternatively, if the terminal device sends the information indicating the quantizer, the access network device may determine a matching dequantizer based on the information indicating the quantizer.

S707: The access network device determines the N pieces of first channel state indication information by using a second decoder and the third channel state indication information input into the second decoder.

The second decoder is a decoder used together with the second encoder described in S703, and implementation of the second decoder may be understood as an inverse process of the second encoder. Specifically, the access network device may determine the second decoder based on the information sent by the terminal device or a related configuration of the second encoder, and then the access network device inputs the received third channel state indication information into the second decoder, to obtain the N pieces of first channel state indication information. It may be understood that in an example, in Solution 2, the second decoder has only a decompression function, and processing performed by the access network device on the third channel state indication information by using the second decoder includes decompression.

Specifically, the second decoder may be obtained through training in the foregoing training process. Corresponding to the three structures of the second encoder described in S703, the second decoder may also have three corresponding structures. For ease of implementation, the following shows three possible structures of the second decoder by using Manner 31-1 to Manner 33-1. Manner 31-1 matches the second encoder described in Manner 21-1, Manner 32-1 matches the second encoder described in Manner 22-1, and Manner 33-1 matches the second encoder described in Manner 23-1.

Manner 31-1: The second decoder includes one third AI model. An input of the second decoder includes the third channel state indication information determined by the access network device in S706, and an output of the one second decoder includes the N pieces of first channel state indication information.

For example, FIG. 8A further shows a process in which the access network device decompresses the third channel state indication information by using the second decoder, to obtain the N pieces of first channel state indication information.

Manner 32-1: The second decoder may include a plurality of third AI models, and a quantity of third AI models in the second decoder is related to the quantity N of downlink transport layers.

For example, FIG. 8B further shows a process in which the access network device decompresses the third channel state indication information by using the second decoder, to obtain four pieces of first channel state indication information. For specific descriptions, refer to the descriptions of FIG. 6B. A difference between FIG. 8B and FIG. 6B lies only in that the second channel state indication information is decompressed in FIG. 6B.

Manner 33-1: When the quantity N of downlink transport layers is greater than 2, the second decoder may include K third AI models. K is a positive integer greater than 1 and less than N-1. For example, K is 2.

FIG. 8C further shows a process in which the access network device decompresses the third channel state indication information by using the second decoder, to obtain four pieces of first channel state indication information. For specific descriptions, refer to the descriptions of FIG. 6C. A difference between FIG. 8C and FIG. 6C lies only in that the second channel state indication information is decompressed in FIG. 6C.

S708: The access network device determines the channel information of the N downlink transport layers by using a first decoder and the N pieces of first channel state indication information input into the first decoder.

Specifically, refer to S506 for understanding. Details are not described in this disclosure again.

In an example, corresponding to inclusion of the four first AI models in the first encoder in FIG. 8A, FIG. 8B, and FIG. 8C, it is further shown in FIG. 8A, FIG. 8B, and FIG. 8C that the first decoder includes four fourth AI models, that is, a fourth AI model 11 associated with the first AI model 11, a fourth AI model 12 associated with the first AI model 12, a fourth AI model 13 associated with the first AI model 13, and a fourth AI model 14 associated with the first AI model 14. An input of the fourth AI model 11 includes a $1^{st}$ piece of first channel state indication information, and an output of the fourth AI model 11 includes channel information of a downlink transport layer 1. An input of the fourth AI model 12 includes a $2^{nd}$ piece of first channel state indication information, and an output of the fourth AI model 12 includes channel information of a downlink transport layer 2. An input of the fourth AI model 13 includes a $3^{rd}$ piece of first channel state indication information, and an output of the fourth AI model 13 includes channel information of a downlink transport layer 3. An input of the fourth AI model 14 includes a $4^{th}$ piece of first channel state indication information, and an output of the fourth AI model 14 includes channel information of a downlink transport layer 4.

Further, optionally, the access network device may integrate restored channel information of the N downlink transport layers, to restore foregoing downlink channel information estimated based on measurement of a downlink reference signal.

In the foregoing Solution 2, compression is performed twice on the downlink channel information by using a plurality of levels of AI models, so that resources occupied by common information in CSI of a plurality of layers are reduced. Quantization processing is performed on compressed channel state indication information, so that CSI feedback overheads can be reduced.

In the foregoing embodiments of this disclosure, an encoder and a decoder are used together, or a decoder but not an encoder is used. This is not limited. In the encoder and the decoder that are used together, the encoder has a quantization function, and the decoder has a dequantization function; the encoder does not have a quantization function, and the decoder does not have a dequantization function; the encoder has a quantization function, and the decoder does not have a dequantization function; or the encoder does not have a quantization function, and the decoder has a dequantization function. This is not limited.

The foregoing Solution 1 and Solution 2 may be implemented together. For example, in the second encoder and the second decoder that are used together, the second encoder has the quantization function, and the second decoder does not have the dequantization function. In this case, S501 to S504 in Solution 1 are performed first, and then S706 to S708 in Solution 2 are performed. For another example, in the second encoder and the second decoder that are used together, the second encoder does not have the quantization function, and the second decoder has the dequantization function. In this case, S701 to S705 in Solution 2 are performed first, and then S505 to S506 in Solution 1 are performed.

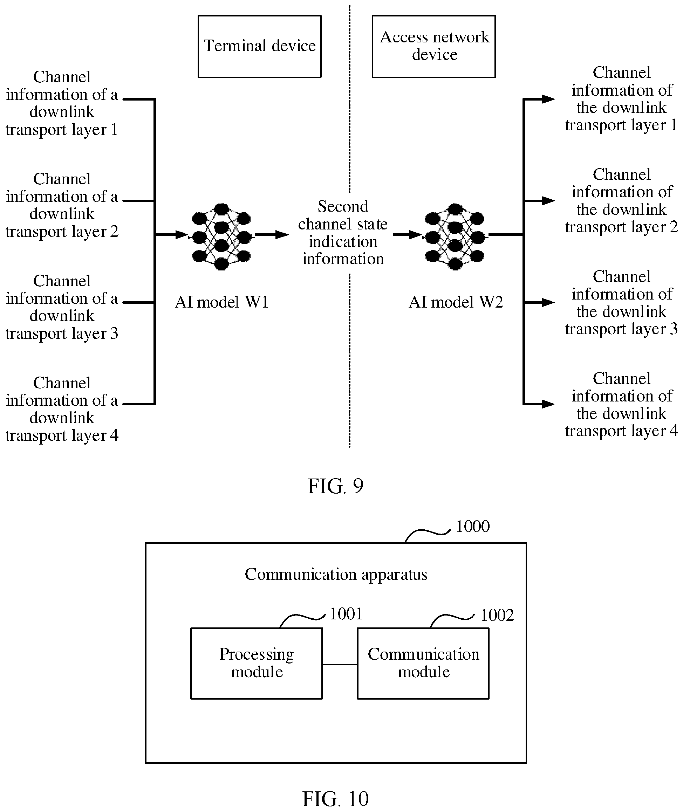

In an optional embodiment parallel to FIG. 5 or FIG. 7, as shown in FIG. 9, functions of the first encoder and the second encoder in FIG. 5 or FIG. 7 are implemented by a same AI model W1, and/or functions of the first decoder and the second decoder are implemented by a same AI model W2 corresponding to the AI model W1. In this case, the AI model W1 and the AI model W2 are used and trained together. A specific training process is similar to the described joint training of the first encoder, the second encoder, the first decoder, and the second decoder, and details are not described herein again. An input of the AI model W1 is channel information of N downlink transport layers, and an output of the AI model W1 is second channel state indication information. An input of the AI model W2 is the second channel state indication information, and an output of the AI model W2 is the channel information of the N downlink transport layers.

In a possible implementation, the AI model W1 and the AI model W2 may be trained together for a specific N. In this case, a value of N is in correspondence with the AI model W1 and the AI model W2. For example, a value N1 of N corresponds to an AI model W11 and an AI model W21, and a value N2 of N corresponds to an AI model W12 and an AI model W22. A quantity of values of N corresponds to a plurality of sets of AI models W1 and AI models W2. A terminal device may send, to an access network device, information indicating a rank, where a value of the rank is the same as the value of N. Alternatively, a terminal device may send indication information to an access network device, to indicate the AI model W1 and/or the AI model W2. Alternatively, a range of a sequence length of the second channel state indication information corresponds to the AI model WI and/or the AI model W2, and/or corresponds to the value of N, that is, the range of the sequence length of the second channel state indication information may indicate the AI model WI and/or the AI model W2, and/or the value of N. In this way, when the value of N is variable, the access network device may determine to perform decoding processing on the received second channel state indication information by using the AI model W2 matching the AI model W1 used by the terminal device.

In another possible implementation, the AI model W1 and the AI model W2 may be trained together for any N, that is, are not dedicated to a specific N. In this case, optionally, a value of N may be included in the channel information of the N downlink transport layers.

In this manner, compressed transmission of channel information of a plurality of downlink transport layers may also be implemented.

Based on a same concept, refer to FIG. 10. This disclosure provides a communication apparatus 1000. The communication apparatus 1000 includes a processing module 1001 and a communication module 1002. The communication apparatus 1000 may be a terminal device, or may be a communication apparatus that is used in a terminal device or used together with a terminal device and that can implement a communication method performed on a terminal device side. Alternatively, the communication apparatus 1000 may be an access network device, or may be a communication apparatus that is used in an access network device or used together with an access network device and that can implement a communication method performed on an access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the examples in FIG. 5 to FIG. 9, and the communication module 1002 may be configured to implement receiving and sending functions of the terminal device in the examples in FIG. 5 to FIG. 9. Alternatively, the communication apparatus may be understood with reference to the third aspect and the possible designs in the third aspect in the summary.

When the communication apparatus 1000 is used in the access network device, the processing module 1001 may be configured to implement a processing function of the access network device in the examples in FIG. 5 to FIG. 9, and the communication module 1002 may be configured to implement receiving and sending functions of the access network device in the examples in FIG. 5 to FIG. 9. Alternatively, the communication apparatus may be understood with reference to the fourth aspect and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation); and the processing module is an integrated processor, a microprocessor, or an integrated circuit.

Division into the modules in this disclosure is an example, and is merely division into logical functions. There may be another division manner during actual implementation. In addition, functional modules in examples of this disclosure may be integrated into one processor, each of the modules may exist alone physically, or two or more modules may be integrated into one module. The integrated module may be implemented in a form of hardware, or may be implemented in a form of a software functional module.

Based on a same technical concept, this disclosure further provides a communication apparatus 1100. For example, the communication apparatus 1100 may be a chip or a chip system. Optionally, in this disclosure, the chip system may include a chip, or may include a chip and another discrete component.

The communication apparatus 1100 may be configured to implement a function of any network element in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

Couplings in this disclosure are indirect couplings or communication connections between apparatuses, units, or modules, and may be electrical, mechanical, or in another form, and are used for information exchange between the apparatuses, the units, and the modules. The processor 1110 may operate cooperatively with the memory 1120 and the communication interface 1130. A specific connection medium between the processor 1110, the memory 1120, and the communication interface 1130 is not limited in this disclosure.

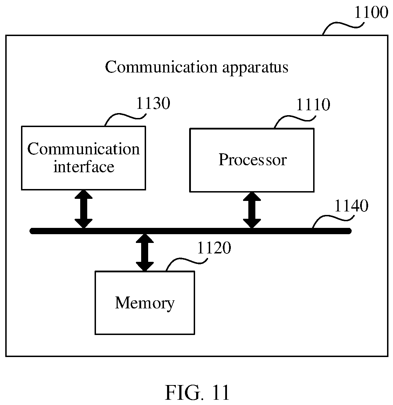

Optionally, refer to FIG. 11. The processor 1110, the memory 1120, and the communication interface 1130 are connected to each other through a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

In this disclosure, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this disclosure. The general-purpose processor may be a microprocessor, any conventional processor, or the like. The steps of the methods disclosed with reference to this disclosure may be directly implemented by a hardware processor, or may be implemented by a combination of hardware and a software module in the processor.

In this disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1100 may be used in an access network device. Specifically, the communication apparatus 1100 may be the access network device, or may be an apparatus that can support the access network device in implementing functions of the access network device in any one of the foregoing examples. The memory 1120 stores a computer program (or instructions) and/or data for implementing the functions of the access network device in any one of the foregoing examples. The processor 1110 may execute the computer program stored in the memory 1120, to complete the method performed by the access network device in any one of the foregoing examples. When the communication apparatus 1100 is used in the access network device, the communication interface in the communication apparatus 1100 may be configured to interact with a terminal device, and send information to the terminal device or receive information from the terminal device.

In another possible implementation, the communication apparatus 1100 may be used in a terminal device. Specifically, the communication apparatus 1100 may be the terminal device, or may be an apparatus that can support the terminal device in implementing functions of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. When the communication apparatus 1100 is used in the terminal device, the communication interface in the communication apparatus 1100 may be configured to interact with an access network device, and send information to the access network device or receive information from the access network device.

The communication apparatus 1100 provided in this example may be used in the access network device to complete the method performed by the access network device, or may be used in the terminal device to complete the method performed by the terminal device. Therefore, for technical effects that can be achieved by the communication apparatus 1100, refer to the foregoing method examples. Details are not described herein again.

Based on the foregoing example, this disclosure provides a communication system, including an access network device and a terminal device. The access network device and the terminal device can implement the communication methods provided in the examples shown in FIG. 5 to FIG. 9.

All or some of the technical solutions provided in this disclosure may be implemented by software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this disclosure, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this disclosure without departing from the scope of this disclosure. This disclosure is intended to cover these modifications and variations of this disclosure provided that they fall within the scope of the claims of this disclosure and their equivalent technologies.

**Claims**

1. A communication method, comprising:

   determining N pieces of first channel state indication information by using a first encoder and channel information of N downlink transport layers input into the first encoder, wherein N is a positive integer greater than 1;
   determining second channel state indication information by using a second encoder and the N pieces of first channel state indication information input into the second encoder, wherein the second channel state indication information corresponds to the N downlink transport layers, and a sequence length corresponding to the second channel state indication information is less than a sum of sequence lengths corresponding to the N pieces of first channel state indication information; and
   sending the second channel state indication information.

2. The method according to claim 1, further comprising:
   sending information indicating a rank, wherein a value of N is equal to a value of the rank, and one or more of a structure of the second encoder, a structure of a second decoder matching the second encoder, or a structure of a second auto-encoder to which the second encoder belongs correspond to the value of N.

3. The method according to claim 2, wherein one or more of a structure of the first encoder, a structure of a first decoder matching the first encoder, or a structure of a first auto-encoder to which the first encoder belongs also correspond to the value of N.

4. The method according to claim 1, further comprising:
   sending first information, wherein the first information indicates one or more of the following: the first encoder, a first decoder matching the first encoder, and a first auto-encoder AE to which the first encoder belongs.

5. The method according to claim 1 or 4, further comprising:
sending second information, wherein the second information indicates one or more of the following: the second encoder, a second decoder matching the second encoder, and a second auto-encoder AE to which the second encoder belongs.

6. The method according to any one of claims 1 to 5, wherein the first encoder comprises N first artificial intelligence AI models, and the channel information of the N downlink transport layers is respectively input into the N first artificial intelligence AI models; or

the first encoder comprises one first artificial intelligence AI model, and the channel information of the N downlink transport layers is input in serial or parallel into the one first artificial intelligence AI model; or
the first encoder comprises M first artificial intelligence AI models, M is an integer greater than 1 and less than N, and channel information of some downlink transport layers in the channel information of the N downlink transport layers is input in serial or parallel into one first artificial intelligence AI model in the M first artificial intelligence AI models.

7. The method according to any one of claims 1 to 6, wherein the second encoder comprises one second artificial intelligence AI model, an input of the one second artificial intelligence AI model comprises the N pieces of first channel state indication information, and an output of the one second artificial intelligence AI model comprises the second channel state indication information.

8. The method according to any one of claims 1 to 6, wherein N is greater than 2, and the second encoder comprises N-1 second artificial intelligence AI models;

an input of a $1^{st}$ second artificial intelligence AI model in the N-1 second artificial intelligence AI models comprises a $1^{st}$ piece of first channel state indication information and a $2^{nd}$ piece of first channel state indication information in the N pieces of first channel state indication information, and an output of the $1^{st}$ second artificial intelligence AI model comprises a $1^{st}$ piece of fourth channel state indication information; and
an input of an $i^{th}$ second artificial intelligence AI model in the N-1 second artificial intelligence AI models comprises an $(i-1)^{th}$ piece of fourth channel state indication information output by an $(i-1)^{th}$ second artificial intelligence AI model and an $(i+1)^{th}$ piece of first channel state indication information in the N pieces of first channel state indication information, and an output of the $i^{th}$ second artificial intelligence AI model comprises an $i^{th}$ piece of fourth channel state indication information, wherein $2 \leq i \leq N-1$, i is a positive integer, and an $(N-1)^{th}$ piece of fourth channel state indication information output by the $(N-1)^{th}$ second artificial intelligence AI model is the second channel state indication information.

9. The method according to any one of claims 1 to 6, wherein N is greater than 2, the second encoder comprises K second artificial intelligence AI models, K is an integer greater than 1 and less than N, and some first channel state indication information in the N pieces of first channel state indication information is input in parallel into one second artificial intelligence AI model in the K second artificial intelligence AI models.

10. The method according to any one of claims 1 to 6, wherein the determining second channel state indication information by using a second encoder and the N pieces of first channel state indication information input into the second encoder comprises:

processing the N pieces of first channel state indication information based on the second encoder, to obtain third channel state indication information; and
performing quantization processing on the third channel state indication information to obtain the second channel state indication information.

11. The method according to any one of claims 1 to 10, further comprising:

obtaining a downlink reference signal; and
determining the value of N and the channel information of the N downlink transport layers based on the downlink reference signal.

12. The method according to any one of claims 1 to 11, wherein a range of the sequence length of the second channel state indication information corresponds to one or more of the following: the structure of the second encoder, the structure of the second decoder matching the second encoder, the structure of the second auto-encoder to which the second encoder belongs, and the value of N.

13. A communication method, comprising:

obtaining second channel state indication information;
determining N pieces of first channel state indication information by using a second decoder and the second channel state indication information, wherein a sum of sequence lengths corresponding to the N pieces of first channel state indication information is greater than a sequence length corresponding to the second channel state indication information, and N is a positive integer greater than 1; and
determining channel information of N downlink transport layers by using a first decoder and the N pieces of first channel state indication information input into the first decoder.

14. The method according to claim 13, further comprising:
obtaining information indicating a rank, wherein a value of N is equal to a value of the rank, and one or more of a structure of the second decoder, a structure of a second encoder matching the second decoder, or a structure of a second auto-encoder to which the second encoder belongs correspond to the value of N.

15. The method according to claim 14, wherein one or more of a structure of the first decoder, a structure of a first encoder matching the first decoder, or a structure of a first auto-encoder to which the first encoder belongs also correspond to the value of N.

16. The method according to claim 13, further comprising:
obtaining first information, wherein the first information indicates one or more of the following: a first encoder, the first decoder matching the first encoder, and a first auto-encoder AE to which the first encoder belongs.

17. The method according to claim 13 or 14, further comprising: obtaining second information, wherein the second information indicates one or more of the following: a second encoder, the second decoder matching the second encoder, and a second auto-encoder AE to which the second encoder belongs.

18. The method according to any one of claims 13 to 17, wherein the second decoder comprises one third artificial intelligence AI model, an input of the one third artificial intelligence AI model comprises the second channel state indication information, and an output of the one third artificial intelligence AI model comprises the N pieces of first channel state indication information.

19. The method according to any one of claims 13 to 17, wherein N is greater than 2, and the second decoder comprises N-1 third artificial intelligence AI models; an input of an $(N-1)^{th}$ third artificial intelligence AI model in the N-1 third artificial intelligence AI models comprises the second channel state indication information, and an output of the $(N-1)^{th}$ third artificial intelligence AI model comprises an $(N-2)^{th}$ piece of fourth channel state indication information and an $N^{th}$ piece of first channel state indication information; an input of an $(N-i)^{th}$ third artificial intelligence AI model comprises an $(N-i)^{th}$ piece of fourth channel state indication information, and an output of the $(N-i)^{th}$ third artificial intelligence AI model comprises an $(N-i+1)^{th}$ piece of first channel state indication information in the N pieces of first channel state indication information and an $(N-i-1)^{th}$ piece of fourth channel state indication information; and an input of a $1^{st}$ third artificial intelligence AI model comprises a $1^{st}$ piece of fourth channel state indication information, and an output of the $1^{st}$ third artificial intelligence AI model comprises a $1^{st}$ piece of first channel state indication information and a $2^{nd}$ piece of first channel state indication information in the N pieces of first channel state indication information, wherein i is a positive integer from 2 to N-2, and the second channel state indication information is an $(N-1)^{th}$ piece of fourth channel state indication information.

20. The method according to any one of claims 13 to 17, wherein N is greater than 2, the second decoder comprises K third artificial intelligence AI models, K is a positive integer greater than 1 and less than N-1, and some K third AI models in the K third AI models are used to restore at least two pieces of first channel state indication information in the N pieces of first channel state indication information.

21. The method according to any one of claims 13 to 17, wherein the determining N pieces of first channel state indication information by using a second decoder and the second channel state indication information comprises:

performing dequantization processing on the second channel state indication information to obtain third channel state indication information; and
determining the N pieces of first channel state indication information by using the second decoder and the third channel state indication information input into the second decoder.

22. The method according to any one of claims 13 to 21, wherein

the first decoder comprises N fourth artificial intelligence AI models, and the N pieces of first channel state indication information are respectively input into the N fourth artificial intelligence AI models; or
the first decoder comprises one fourth artificial intelligence AI model, and the N pieces of first channel state indication information are input in serial or parallel into the one fourth artificial intelligence AI model; or
the first decoder comprises M fourth artificial intelligence AI models, M is an integer greater than 1 and less than N, and some first channel state indication information in the N pieces of first channel state indication information is input in serial or parallel into one fourth artificial intelligence AI model in the M fourth artificial intelligence AI models.

23. The method according to any one of claims 13 to 22, wherein a range of the sequence length of the second channel state indication information corresponds to one or more of the following: the structure of the second encoder, the structure of the second decoder matching the second encoder, the structure of the second auto-encoder to which the second encoder belongs, and the value of N.

24. A communication apparatus, comprising:

a processing module, configured to determine N pieces of first channel state indication information by using a first encoder and channel information of N downlink transport layers input into the first encoder, wherein N is a positive integer greater than 1, wherein
the processing module is further configured to determine second channel state indication information by using a second encoder and the N pieces of first channel state indication information input into the second encoder, wherein the second channel state indication information corresponds to the N downlink transport layers, and a sequence length corresponding to the second channel state indication information is less than a sum of sequence lengths corresponding to the N pieces of first channel state indication information; and
a communication module, configured to send the second channel state indication information.

25. The apparatus according to claim 24, wherein the communication module is further configured to:
send information indicating a rank, wherein a value of N is equal to a value of the rank, and one or more of a structure of the second encoder, a structure of a second decoder matching the second encoder, or a structure of a second auto-encoder to which the second encoder belongs correspond to the value of N.

26. The apparatus according to claim 25, wherein one or more of a structure of the first encoder, a structure of a first decoder matching the first encoder, or a structure of a first auto-encoder to which the first encoder belongs also correspond to the value of N.

27. The apparatus according to claim 24, wherein the communication module is further configured to:
send first information, wherein the first information indicates one or more of the following: the first encoder, a first decoder matching the first encoder, and a first auto-encoder AE to which the first encoder belongs.

28. The apparatus according to claim 24 or 27, wherein the communication module is further configured to:
send second information, wherein the second information indicates one or more of the following: the second encoder, a second decoder matching the second encoder, and a second auto-encoder AE to which the second encoder belongs.

29. The apparatus according to any one of claims 24 to 28, wherein the first encoder comprises N first artificial intelligence AI models, and the channel information of the N downlink transport layers is respectively input into the N first artificial intelligence AI models; or

the first encoder comprises one first artificial intelligence AI model, and the channel information of the N downlink transport layers is input in serial or parallel into the one first artificial intelligence AI model; or
the first encoder comprises M first artificial intelligence AI models, M is an integer greater than 1 and less than N, and channel information of some downlink transport layers in the channel information of the N downlink transport layers is input in serial or parallel into one first artificial intelligence AI model in the M first artificial intelligence AI models.

30. The apparatus according to any one of claims 24 to 29, wherein the second encoder comprises one second artificial intelligence AI model, an input of the one second artificial intelligence AI model comprises the N pieces of first channel state indication information, and an output of the one second artificial intelligence AI model comprises the second channel state indication information.

31. The apparatus according to any one of claims 24 to 30, wherein N is greater than 2, and the second encoder comprises N-1 second artificial intelligence AI models;

an input of a 1st second artificial intelligence AI model in the N-1 second artificial intelligence AI models comprises a 1st piece of first channel state indication information and a 2nd piece of first channel state indication information in the N pieces of first channel state indication information, and an output of the 1st second artificial intelligence AI model comprises a 1st piece of fourth channel state indication information; and

an input of an ith second artificial intelligence AI model in the N-1 second artificial intelligence AI models comprises an (i-1)th piece of fourth channel state indication information output by an (i-1)th second artificial intelligence AI model and an (i+1)th piece of first channel state indication information in the N pieces of first channel state indication information, and an output of the ith second artificial intelligence AI model comprises an ith piece of fourth channel state indication information, wherein $2 \leq i \leq N-1$, i is a positive integer, and an (N-1)th piece of fourth channel state indication information output by the (N-1)th second artificial intelligence AI model is the second channel state indication information.

32. The apparatus according to any one of claims 24 to 29, wherein N is greater than 2, the second encoder comprises K second artificial intelligence AI models, K is an integer greater than 1 and less than N, and some first channel state indication information in the N pieces of first channel state indication information is input in parallel into one second artificial intelligence AI model in the K second artificial intelligence AI models.

33. The apparatus according to any one of claims 24 to 29, wherein the determining second channel state indication information by using a second encoder and the N pieces of first channel state indication information input into the second encoder comprises:

processing the N pieces of first channel state indication information based on the second encoder, to obtain third channel state indication information; and

performing quantization processing on the third channel state indication information to obtain the second channel state indication information.

34. The apparatus according to any one of claims 24 to 33, wherein

the communication module is further configured to obtain a downlink reference signal; and

the processing module is further configured to determine the value of N and the channel information of the N downlink transport layers based on the downlink reference signal.

35. The apparatus according to any one of claims 24 to 34, wherein a range of the sequence length of the second channel state indication information corresponds to one or more of the following: the structure of the second encoder, the structure of the second decoder matching the second encoder, the structure of the second auto-encoder to which the second encoder belongs, and the value of N.

36. A communication apparatus, comprising:

a communication module, configured to obtain second channel state indication information; and

a processing module, configured to determine N pieces of first channel state indication information by using a second decoder and the second channel state indication information, wherein a sum of sequence lengths corresponding to the N pieces of first channel state indication information is greater than a sequence length corresponding to the second channel state indication information, and N is a positive integer greater than 1, wherein

the processing module is further configured to determine channel information of N downlink transport layers by using a first decoder and the N pieces of first channel state indication information input into the first decoder.

37. The apparatus according to claim 36, wherein the communication module is further configured to:
obtain information indicating a rank, wherein a value of N is equal to a value of the rank, and one or more of a structure of the second decoder, a structure of a second encoder matching the second decoder, or a structure of a second auto-encoder to which the second encoder belongs correspond to the value of N.

38. The apparatus according to claim 37, wherein one or more of a structure of the first decoder, a structure of a first encoder matching the first decoder, or a structure of a first auto-encoder to which the first encoder belongs also correspond to the value of N.

39. The apparatus according to claim 36, wherein the communication module is further configured to:
obtain first information, wherein the first information indicates one or more of the following: a first encoder, the first decoder matching the first encoder, and a first auto-encoder AE to which the first encoder belongs.

40. The apparatus according to claim 36 or 37, further comprising: obtaining second information, wherein the second information indicates one or more of the following: a second encoder, the second decoder matching the second encoder, and a second auto-encoder AE to which the second encoder belongs.

41. The apparatus according to any one of claims 36 to 40, wherein the second decoder comprises one third artificial intelligence AI model, an input of the one third artificial intelligence AI model comprises the second channel state indication information, and an output of the one third artificial intelligence AI model comprises the N pieces of first channel state indication information.

42. The apparatus according to any one of claims 36 to 40, wherein N is greater than 2, and the second decoder comprises N-1 third artificial intelligence AI models; an input of an $(N-1)^{th}$ third artificial intelligence AI model in the N-1 third artificial intelligence AI models comprises the second channel state indication information, and an output of the $(N-1)^{th}$ third artificial intelligence AI model comprises an $(N-2)^{th}$ piece of fourth channel state indication information and an $N^{th}$ piece of first channel state indication information; an input of an $(N-i)^{th}$ third artificial intelligence AI model comprises an $(N-i)^{th}$ piece of fourth channel state indication information, and an output of the $(N-i)^{th}$ third artificial intelligence AI model comprises an $(N-i+1)^{th}$ piece of first channel state indication information in the N pieces of first channel state indication information and an $(N-i-1)^{th}$ piece of fourth channel state indication information; and an input of a $1^{st}$ third artificial intelligence AI model comprises a $1^{st}$ piece of fourth channel state indication information, and an output of the $1^{st}$ third artificial intelligence AI model comprises a $1^{st}$ piece of first channel state indication information and a $2^{nd}$ piece of first channel state indication information in the N pieces of first channel state indication information, wherein i is a positive integer from 2 to N-2, and the second channel state indication information is an $(N-1)^{th}$ piece of fourth channel state indication information.

43. The apparatus according to any one of claims 36 to 40, wherein N is greater than 2, the second decoder comprises K third artificial intelligence AI models, K is a positive integer greater than 1 and less than N-1, and some K third AI models in the K third AI models are used to restore at least two pieces of first channel state indication information in the N pieces of first channel state indication information.

44. The apparatus according to any one of claims 36 to 40, wherein the processing module is specifically configured to:

perform dequantization processing on the second channel state indication information to obtain third channel state indication information; and
determine the N pieces of first channel state indication information by using the second decoder and the third channel state indication information input into the second decoder.

45. The apparatus according to any one of claims 36 to 44, wherein

the first decoder comprises N fourth artificial intelligence AI models, and the N pieces of first channel state indication information are respectively input into the N fourth artificial intelligence AI models; or
the first decoder comprises one fourth artificial intelligence AI model, and the N pieces of first channel state indication information are input in serial or parallel into the one fourth artificial intelligence AI model; or
the first decoder comprises M fourth artificial intelligence AI models, M is an integer greater than 1 and less than N, and some first channel state indication information in the N pieces of first channel state indication information is input in serial or parallel into one fourth artificial intelligence AI model in the M fourth artificial intelligence AI models.

46. The apparatus according to any one of claims 36 to 45, wherein a range of the sequence length of the second channel state indication information corresponds to one or more of the following: the structure of the second encoder, the structure of the second decoder matching the second encoder, the structure of the second auto-encoder to which the second encoder belongs, and the value of N.

47. A communication apparatus, comprising:
a processor, wherein the processor is coupled to a memory, and the processor is configured to invoke computer program instructions stored in the memory, to perform the method according to any one of claims 1 to 12.

48. A communication apparatus, comprising:
a processor, wherein the processor is coupled to a memory, and the processor is configured to invoke computer program instructions stored in the memory, to perform the method according to any one of claims 13 to 23.

49. A communication system, comprising the communication apparatus according to any one of claims 24 to 35 and the communication apparatus according to any one of claims 36 to 46.

50. A computer-readable storage medium, wherein the computer-readable storage medium stores instructions, and when the instructions are run on a computer, the computer is enabled to perform the method according to any one of claims 1 to 12 or the method according to any one of claims 13 to 23.

51. A computer program product, comprising instructions, wherein when the instructions are run on a computer, the computer is enabled to perform the method according to any one of claims 1 to 12 or the method according to any one of claims 13 to 23.

100

120j

120i

110b

120d

120e

110a

120f

120a

120g

120h

120b

120c

FIG. 1

$w_0 x_0$

$w_1 x_1$

$w_n x_n$

Neuron

$y = f\left(\sum_{i=0}^{n} w_i x_i + b\right)$

$y$

FIG. 2A

FIG. 2B

FIG. 2C

FIG. 3

(a)                    (b)                    (c)

FIG. 4A

FIG. 4B

FIG. 4C

FIG. 4D

```
┌─────────────────────┐                              ┌─────────────────────┐
│   Terminal device   │                              │   Access network    │
│                     │                              │      device         │
└──────────┬──────────┘                              └──────────┬──────────┘
           │                                                    │
┌──────────┴──────────────────────────────────┐                │
│ S501: Determine channel information of N      │                │
│       downlink transport layers               │                │
└──────────┬──────────────────────────────────┘                │
           │                                                    │
┌──────────┴──────────────────────────────────┐                │
│ S502: Determine N pieces of first channel     │                │
│ state indication information by using a first │                │
│ encoder and the channel information of the N  │                │
│ downlink transport layers input into the      │                │
│ first encoder                                  │                │
└──────────┬──────────────────────────────────┘                │
           │                                                    │
┌──────────┴──────────────────────────────────┐                │
│ S503: Determine second channel state          │                │
│ indication information by using a second       │                │
│ encoder and the N pieces of first channel     │                │
│ state indication information input into the    │                │
│ second decoder                                 │                │
└──────────┬──────────────────────────────────┘                │
           │                                                    │
           │──── S504: Second channel state ───────────────────▶│
           │      indication information                         │
           │                                                    │
           │       ┌──────────────────────────────────────────┐ │
           │       │ S505: Determine the N pieces of first     │ │
           │       │ channel state indication information by   │ │
           │       │ using a second decoder and the second     │ │
           │       │ channel state indication information input│ │
           │       │ into the second decoder                    │ │
           │       └──────────────────────────────────────────┘ │
           │                                                    │
           │       ┌──────────────────────────────────────────┐ │
           │       │ S506: Determine the channel information   │ │
           │       │ of the N downlink transport layers by     │ │
           │       │ using a first decoder and the N pieces of │ │
           │       │ first channel state indication            │ │
           │       │ information input into the first decoder  │ │
           │       └──────────────────────────────────────────┘ │
           │                                                    │
```

FIG. 5

FIG. 6A

Channel
information
of a
downlink
transport
layer 1

First AI
model 11

1$^{st}$ piece of
first channel
state
indication
information

Channel
information
of a
downlink
transport
layer 2

First AI
model 12

2$^{nd}$ piece of
first channel
state
indication
information

Second
AI model
21

1$^{st}$ piece of fourth channel
state indication information

Channel
information
of a
downlink
transport
layer 3

First AI
model 13

3$^{rd}$ piece of
first channel
state
indication
information

Second AI
model 22

2$^{nd}$ piece of fourth channel
state indication information

Channel
information
of a
downlink
transport
layer 4

First AI
model 14

4$^{th}$ piece of
first channel
state
indication
information

Second AI
model 23

Terminal
device

Access
network
device

Second
channel
state
indication
information

1$^{st}$ piece of fourth channel state
indication information

Third AI
model 21

1$^{st}$ piece of
first channel
state
indication
information

Fourth AI
model 11

Channel
information
of the
downlink
transport
layer 1

2$^{nd}$ piece of
first channel
state
indication
information

Fourth AI
model 12

Channel
information
of the
downlink
transport
layer 2

Third AI
model 22

3$^{rd}$ piece of
first channel
state
indication
information

Fourth AI
model 13

Channel
information
of the
downlink
transport
layer 3

2$^{nd}$ piece of fourth channel
state indication information

Third AI
model 23

4$^{th}$ piece of
first channel
state
indication
information

Fourth AI
model 14

Channel
information
of the
downlink
transport
layer 4

FIG. 6B

FIG. 6C

Terminal device

Access network device

S701: Determine channel information of N downlink transport layers

S702: Determine N pieces of first channel state indication information by using a first encoder and the channel information the N downlink transport layers input into the first encoder

S703: Determine third channel state indication information by using a second encoder and the N pieces of first channel state indication information input into the second decoder

S704: Perform quantization processing on the third channel state indication information to obtain second channel state indication information

S705: Second channel state indication information

S706: Perform dequantization processing on the second channel state indication information to obtain the third channel state indication information

S707: Determine the N pieces of first channel state indication information by using a second decoder and the third channel state indication information input into the second decoder

S708: Determine the channel information of the N downlink transport layers by using a first decoder and the N pieces of first channel state indication information input into the first decoder

FIG. 7

First encoder

Terminal device

Access network device

First decoder

Channel information of a downlink transport layer 1 → First AI model 11 → 1st piece of first channel state indication information

Channel information of a downlink transport layer 2 → First AI model 12 → 2nd piece of first channel state indication information

Channel information of a downlink transport layer 3 → First AI model 13 → 3rd piece of first channel state indication information

Channel information of a downlink transport layer 4 → First AI model 14 → 4th piece of first channel state indication information

Second encoder

Third channel state indication information

Quantizer → Second channel state indication information → Dequantizer

Third channel state indication information

Second decoder

1st piece of first channel state indication information → Fourth AI model 11 → Channel information of the downlink transport layer 1

2nd piece of first channel state indication information → Fourth AI model 12 → Channel information of the downlink transport layer 2

3rd piece of first channel state indication information → Fourth AI model 13 → Channel information of the downlink transport layer 3

4th piece of first channel state indication information → Fourth AI model 14 → Channel information of the downlink transport layer 4

FIG. 8A

Channel information of a downlink transport layer 1

First AI model 11

1st piece of first channel state indication information

Channel information of a downlink transport layer 2

First AI model 12

2nd piece of first channel state indication information

Second AI model 21

1st piece of fourth channel state indication information

Channel information of a downlink transport layer 3

First AI model 13

3rd piece of first channel state indication information

Second AI model 22

2nd piece of fourth channel state indication information

Channel information of a downlink transport layer 4

First AI model 14

4th piece of first channel state indication information

Second AI model 23

Terminal device

Access network device

Quantizer

Second channel state indication information

Dequantizer

Third channel state indication information

1st piece of fourth channel state indication information

Third AI model 22

1st piece of first channel state indication information

Fourth AI model 11

Channel information of the downlink transport layer 1

2nd piece of first channel state indication information

Fourth AI model 12

Channel information of the downlink transport layer 2

Third AI model 21

Third channel state indication information

Third AI model 23

2nd piece of fourth channel state indication information

3rd piece of first channel state indication information

Fourth AI model 13

Channel information of the downlink transport layer 3

4th piece of first channel state indication information

Fourth AI model 14

Channel information of the downlink transport layer 4

FIG. 8B

EP 4 539 351 A1

Terminal device

Access network device

Channel information of a downlink transport layer 1

First AI model 11

1st piece of first channel state indication information

Channel information of a downlink transport layer 2

First AI model 12

2nd piece of first channel state indication information

Channel information of a downlink transport layer 3

First AI model 13

3rd piece of first channel state indication information

Second AI model 21

1st piece of fourth channel state indication information

Channel information of a downlink transport layer 4

First AI model 14

4th piece of first channel state indication information

Second AI model 22

Quantizer

Second channel state indication information

Third channel state indication information

Dequantizer

Third channel state indication information

Third AI model 21

1st piece of fourth channel state indication information

Third AI model 22

1st piece of first channel state indication information

Fourth AI model 11

Channel information of the downlink transport layer 1

2nd piece of first channel state indication information

Fourth AI model 12

Channel information of the downlink transport layer 2

3rd piece of first channel state indication information

Fourth AI model 13

Channel information of the downlink transport layer 3

4th piece of first channel state indication information

Fourth AI model 14

Channel information of the downlink transport layer 4

FIG. 8C

Channel
information of a
downlink
transport layer 1

Channel
information of a
downlink
transport layer 2

Channel
information of a
downlink
transport layer 3

Channel
information of a
downlink
transport layer 4

Terminal device

Access network
device

AI model W1

Second
channel state
indication
information

AI model W2

Channel
information of
the downlink
transport layer 1

Channel
information of
the downlink
transport layer 2

Channel
information of
the downlink
transport layer 3

Channel
information of
the downlink
transport layer 4

FIG. 9

1000

Communication apparatus

1001

1002

Processing
module

Communication
module

FIG. 10

1100

Communication apparatus

1130

1110

Communication
interface

Processor

1140

1120

Memory

FIG. 11

## INTERNATIONAL SEARCH REPORT

International application No.

**PCT/CN2023/105001**

| A. | CLASSIFICATION OF SUBJECT MATTER |
|---|---|

H04B7/0413(2017.01)i

According to International Patent Classification (IPC) or to both national classification and IPC

| B. | FIELDS SEARCHED |
|---|---|

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IEEE: 编码器, 信道状态信息, 压缩, 第二, 多次, 指示, 人工智能, 神经网络, 多个, CSI, coder, compress, second, indicate, AI, multiple

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116260494 A (ZTE CORP.) 13 June 2023 (2023-06-13)<br>description, paragraphs [0003]-[0140] | 1, 6, 7, 10, 11, 13, 18, 21, 22, 24, 29, 30, 33, 34, 36, 41, 44, 45, 47-51 |
| PX | CN 116193504 A (NANJING YUNCHENG SEMICONDUCTOR CO., LTD. et al.) 30 May 2023 (2023-05-30)<br>description, paragraphs [0018]-[0143] | 1, 6, 7, 10, 11, 13, 18, 21, 22, 24, 29, 30, 33, 34, 36, 41, 44, 45, 47-51 |
| X | CN 110350958 A (SOUTHEAST UNIVERSITY) 18 October 2019 (2019-10-18)<br>description, paragraphs [0035]-[0076] | 1, 6, 7, 10, 11, 13, 18, 21, 22, 24, 29, 30, 33, 34, 36, 41, 44, 45, 47-51 |
| A | CN 113796020 A (FRAUNHOFER-GESELLSCHAFT ZUR FÖRDERUNG DER ANGEWANDTEN FORSCHUNG E. V.) 14 December 2021 (2021-12-14)<br>entire document | 1-51 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 September 2023** | **23 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/105001**

| Patent document cited in search report | | | Publication date (day/month/year) | Patent family member(s) | Publication date (day/month/year) |
|---|---|---|---|---|---|
| CN | 116260494 | A | 13 June 2023 | None | |
| CN | 116193504 | A | 30 May 2023 | None | |
| CN | 110350958 | A | 18 October 2019 | None | |
| CN | 113796020 | A | 14 December 2021 | None | |

Form PCT/ISA/210 (patent family annex) (July 2022)

**REFERENCES CITED IN THE DESCRIPTION**

**Patent documents cited in the description**

- CN 202210800531